(19) Europäisches Patentamt
European Patent Office
Office européen des brevets

(11) **EP 4 004 486 B1**

(12) **EUROPÄISCHE PATENTSCHRIFT**

(45) Veröffentlichungstag und Bekanntmachung des Hinweises auf die Patenterteilung:
**05.03.2025 Patentblatt 2025/10**

(21) Anmeldenummer: **20740328.8**

(22) Anmeldetag: **17.07.2020**

(51) Internationale Patentklassifikation (IPC):
**G01B 9/02015** *(2022.01)* **G01B 9/02001** *(2022.01)*
**G01B 11/24** *(2006.01)*

(52) Gemeinsame Patentklassifikation (CPC):
**G01B 11/2441; G01B 9/02007; G01B 9/02027;**
G01B 2210/56; G01B 2290/45

(86) Internationale Anmeldenummer:
**PCT/EP2020/070349**

(87) Internationale Veröffentlichungsnummer:
**WO 2021/013747 (28.01.2021 Gazette 2021/04)**

(54) **VORRICHTUNG UND VERFAHREN ZUR MESSUNG VON HÖHENPROFILEN AN EINEM OBJEKT**

DEVICE AND METHOD FOR MEASURING HEIGHT PROFILES ON AN OBJECT

DISPOSITIF ET PROCÉDÉ DE MESURE DE PROFILS DE HAUTEUR SUR UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.07.2019 EP 19188318**

(43) Veröffentlichungstag der Anmeldung:
**01.06.2022 Patentblatt 2022/22**

(73) Patentinhaber: **sentronics metrology GmbH**
**68167 Mannheim (DE)**

(72) Erfinder: **SROCKA, Bernd**
**99084 Erfurt (DE)**

(74) Vertreter: **Durm Patentanwälte PartG mbB**
**Patentanwälte**
**Moltkestrasse 45**
**76133 Karlsruhe (DE)**

(56) Entgegenhaltungen:
**EP-A1- 3 477 252    CN-A- 109 387 155**
**US-B1- 7 050 171**

**Beschreibung**

Die vorliegende Erfindung betrifft eine Vorrichtung, ein System und ein Verfahren zur Messung von Oberflächenprofilen oder Höhenprofilen auf flachen Objekten, insbesondere auf Wafern der Halbleiterindustrie. Die Vorrichtung umfasst einen Strahlteiler zum Aufteilen eines monochromatischen Lichtstrahls und zum Weiterleiten eines Teilstrahls zu dem Objekt. Das System umfasst die optische Vorrichtung, eine Detektoreinheit, eine Lichtquelle und eine Signalauswerteeinheit zum Ermitteln des Oberflächenprofils.

In vielen Industriezweigen werden Oberflächenprofile von flächigen Produkten mit bildgebenden Verfahren optisch vermessen. Beispielsweise werden in der Halbleiterindustrie die Oberflächen von Wafern vermessen. Wafer sind Scheiben aus Halbleiter-, Glas-, oder Keramikmaterialien. Sie werden in bestimmten Anwendungen typischerweise ganzflächig oder zumindest auf großen Teilflächen geprüft. Auf den Wafern werden die Schaltkreise ("Chips") hergestellt, die später vielfältige Aufgaben in elektronischen Geräten der Rechentechnik, Sensorik, Steuerung und Überwachung erfüllen.

Zur elektrischen Kontaktierung der Schaltkreise wurden in herkömmlichen Verfahren Drähte vom Chip-Gehäuse auf den Chip geführt und dort auf metallischen Kontaktflächen befestigt. Mit der fortschreitenden Miniaturisierung und der immer höheren Integration ist es Stand der Technik geworden, die Kontakte durch das Aufbringen von Lötzinnkugeln auf die Kontaktstellen auf dem Chip herzustellen. Dies geschieht bereits, wenn sich der Chip noch im Waferverbund befindet, also der Wafer noch nicht zersägt wurde, um die einzelnen Chips zu vereinzeln. Die Kontakte können dadurch über die gesamte Chipfläche verteilt werden ("Ball grid Arrays"). Die Kontaktierung erfolgt durch Einsetzen des Chips in ein entsprechend mit Kontaktflächen versehenes Gehäuse, wobei durch Erwärmung und Druck das Lötzinn angeschmolzen und der Kontakt hergestellt wird. Für die erfolgreiche Kontaktierung nach diesem Verfahren ist die gleichmäßige Höhe der Lötzinn-Kontaktkugeln von entscheidender Bedeutung.

Gegenwärtig wird für dieses Verfahren von Lötzinnkugeln zu Kupferzylindern übergegangen, welche nur noch mit einer sehr dünnen Lötzinnkappe zur elektrischen Kontaktherstellung versehen sind. Die Kontaktstrukturen können dadurch noch kleiner ausgeführt und dichter platziert werden. Da das Kupfer nicht wie das Lötzinn duktil ist, reduzieren sich die zulässigen Höhentoleranzen für dieses neuere Verfahren deutlich.

Es ist daher erforderlich, die Kontaktstrukturen (Lötzinnkugeln oder Kupferzylinder) auf ihre Höhe hin noch genauer als bisher zu prüfen. Dafür werden schnelle und genaue Messverfahren benötigt, die eine präzise und möglichst vollständige Messung der Kontaktstrukturhöhen ermöglichen. Die vollständige Vermessung aller Kontakte wird insbesondere als vorteilhaft angesehen, weil bereits ein einzelner abweichender Kontakt das fertige Bauelement unbrauchbar machen kann. Es wird daher besonders auf eine hohe Messgeschwindigkeit Wert gelegt. Typischerweise haben aktuelle Kontaktstrukturen Durchmesser von einigen 10 $\mu$m mit stark fallender Tendenz. Das Aspektverhältnis (Verhältnis von Höhe zu Durchmesser) liegt meist bei ca. 1.

Gleichzeitig werden derzeit auch Verfahren entwickelt, mehrere Chips in einem Verbund zu stapeln. Dabei soll auf die Verwendung von erhabenen Kontaktierungsstrukturen nahezu vollständig verzichtet werden. Diese Verfahren werden sowohl für die Integration im Waferverbund als auch für einzelne Chips, die jeweils auf einen noch im Waferverbund befindlichen Chip aufgesetzt werden, untersucht. Auch bei diesen Verfahren besteht großer Bedarf an einer genauen und schnellen Profilmessung, um die hohen Anforderungen an die Planarität der Oberflächen im unteren Nanometer-Bereich gewährleisten zu können.

Die typischen Größen für die Kontaktstrukturen dieser Verfahren sind Durchmesser im einstelligen $\mu$m-Bereich und Profilhöhen von wenigen nm bis einigen 10 nm.

Analoge Aufgabenstellungen sind für andere Strukturen und in anderen Industriezweigen zu lösen. Solche Aufgaben sind z.B. die Vermessung der Höhe von Leiterbahnen und anderen Strukturen auf Elektronik-Boards (Leiterplatten) oder die Vermessung einer Vielzahl von mechanisch-elektrischen Systemkomponenten (MEMS) wie Beschleunigungs-, Druck- und Geschwindigkeitssensoren oder Gyroskopen.

All diese Anwendungen weisen eine Reihe von Gemeinsamkeiten auf. Es besteht bei allen der Bedarf an einer schnellen Prüfung einer hohen Anzahl von in der Regel gleichartigen Prüflingen, wie Leiterplatten, Wafern, Displays und ähnlichen Objekten. Auch der Einsatz von Sensoren zur Erzeugung von Profilund/oder Höhendaten der untersuchten Strukturen ist bei den Anwendungen gleich. Weiterhin erfordern die hier betrachteten Anwendungen nicht zwingend ein lateral hoch aufgelöstes 3-dimensionales Abbild. In manchen Fällen ist zum Teil bereits ein Wert (wie die Kappenhöhe der oben diskutierten Kontaktkugeln und Zylinder) für die Prüfung ausreichend.

Stand der Technik

Herkömmliche Verfahren für die Höhenvermessung nutzen Punktsensoren, Zeilensensoren oder Flächensensoren. Flächige Sensoren, die z.B. auf Verfahren der Deflektometrie basieren, oder Weißlichtinterferometer haben den Vorteil, eine Fläche im Ganzen zu erfassen. Bei der Deflektometrie wird die zu vermessende Fläche als Spiegel benutzt, durch den eine regelmäßig strukturierte Lichtquelle betrachtet wird. Die Höhenvariation des Objektes schlägt sich in der Verzerrung des Spiegelbildes nieder und kann daraus extrahiert werden. Das Verfahren ist sehr schnell, jedoch in seiner lateralen Auflösung begrenzt und daher für die beschriebene Aufgabe nicht oder nur bedingt einsetzbar.

Bei der Weißlichtinterferometrie muss eine Serie von Aufnahmen mit unterschiedlichen Abständen zum Objekt oder zum Interferometerspiegel erfolgen. Dies ist für eine vollflächige Inspektion eines Wafers insgesamt zu langsam. Zeilensensoren nutzen z.B. Triangulation, Stereometrie oder chromatisch konfokale Abbildung. Jedes dieser Verfahren weist beim Übergang zu kleinen Kontakten Messartefakte auf, die die exakte Messung schwierig bis unmöglich machen, oder die Verfahren sind wiederum zu langsam. Bei den herkömmlichen Einsatzvarianten von Punktsensoren ist eine sehr genaue Positionierung auf die Kontaktstruktur erforderlich. Da die laterale Platzierung der Kontakte selbst in die Größenordnung der Auflösung der Sensoren kommt, ist dies zeitaufwändig und zunehmend fehlerbehaftet.

In US 2011/032503, US 2009/009773, DE 10 2014 108886 und DE 695 24 298 werden verschiedene Verfahren zur Verbesserung der Profilmessung auf Basis des interferometrischen Prinzips offenbart. In US 2011/032503 wird ein Verfahren erläutert, um mit Hilfe eines gekippten Referenzspiegels für eine weitgehend plane Oberfläche die globale Neigung in einem Aufnahmeschritt zu ermitteln. In US 2009/009773 wird ein solcher gekippter Referenzspiegel zusammen mit Weißlichtinterferometrie genutzt, um die mathematische Auswertung der Rohdaten zu erleichtern. DE 10 2014 108886 offenbart die Nutzung einer schnellen Modulation der Referenzarmlänge, um die Phasenbestimmung in der Interferometriemessung zu stabilisieren bzw. zu beschleunigen. Dabei wird auch ein zweiter Strahl mit Phasenversatz diskutiert, jedoch lediglich, um die korrekte Phasenbestimmung zweifelsfrei zu machen. DE 695 24 298 nutzt ein Hetrodyn-Verfahren zur Verbesserung der Signalqualität. Allen diesen Veröffentlichungen ist gemein, dass keine Lösung für die Berücksichtigung verschiedener Materialreflexionen offenbart wird.

CN 109 387 155 stellt ein Verfahren vor, in dem mit der sequentiellen Ausführung von mehreren Interferometriemessungen bei verschiedenen Wellenlängen und Referenzspiegelpositionen eine komplette, modellbasierte Charakterisierung der Reflexion an Proben, die aus Stapeln einer oder mehreren Schichten bestehen, vorgenommen wird. Obgleich dieser Ansatz Materialunterschiede in vollem Umfang berücksichtigt, ist die Ausführung von mehreren Messungen - zudem noch mit der dargestellten Umschaltung zwischen verschiedenen Lichtquellen und mechanisch zu bewegenden Komponenten während der Messung - zeitaufwändig und daher für viele Anwendungen zu langsam. EP 3 477 252 schließlich zeigt eine Lösung zur Berücksichtigung der Reflexionsunterschiede verschiedener Oberflächenmaterialien. Im Verfahren muss jedoch der Lichtstrahl räumlich getrennt sowie eine perfekte Lichtfalle eingebaut werden, was beides schwierig zu realisieren ist. Außerdem werden unterschiedliche Messdatenarten erfasst, was die Auswertung anfälliger gegen Fehler macht.

Offenbarung der Erfindung

Es ist Aufgabe der Erfindung, ein verbessertes System und eine verbesserte Vorrichtung zum Erfassen eines Oberflächenprofils einer Objektoberfläche eines Objekts mittels interferometrischer Abstandsmessung vorzuschlagen, die es insbesondere erlauben, eine Vermessung der Höhen auch kleiner Kontaktstrukturen in kürzerer Zeit mit hoher Genauigkeit zu ermöglichen.

Gelöst wird die Aufgabe mit einer optischen Vorrichtung mit den Merkmalen des Anspruchs 1, einem System mit den Merkmalen des Anspruchs 3 und mit einem Verfahren mit den Merkmalen des Anspruchs 15.

Gemäß einem Aspekt der vorliegenden Erfindung umfasst eine optische Vorrichtung mit einen Strahlaufspalter zum Aufspalten eines Lichtstrahls einer Lichtquelle in einen ersten Teilstrahl und einen zweiten Teilstrahl, einen Strahlteiler zum Aufteilen jedes Teilstrahls der Lichtquelle in einen Referenzstrahl und einen Messstrahl und einen Spiegel zur Reflexion der beiden Referenzstrahlen. Jeder Messstrahl wird zur Reflexion auf einen Messbereich auf der Objektoberfläche und nach Reflexion als Objektstrahl zu dem Strahlteiler zurückgeleitet.

Jeder Referenzstrahl wird an dem Spiegel reflektiert und als Spiegelstrahl zu dem Strahlteiler geleitet. Der Spiegel ist derart ausgebildet, dass die beiden reflektierten Referenzstrahlen, also die Spiegelstrahlen einen Phasenunterschied aufweisen. Der Objektstrahl und der Spiegelstrahl interferieren jeweils nach Auftreffen auf den Strahlteiler und werden jeweils als Auswertungsstrahl je einer Detektoreinheit zum Auswerten zugeführt. Die beiden Auswertungsstrahlen weisen beim Auftreffen auf die Detektoreinheit einen Phasenunterschied auf.

Die Vorrichtung umfasst erfindungsgemäß eine Detektoreinheit zum Detektieren der Auswertungsstrahlen und eine Signalauswerteeinheit zum Auswerten der detektierten Auswertungsstrahlen und Ermitteln des Oberflächenprofils.

zum Ermitteln des Oberflächenprofils wird jeder Messstrahl zur Reflexion auf einen Messbereich auf der Objektoberfläche geleitet und nach Reflexion als Objektstrahl zu dem Strahlteiler geleitet. Jeder Referenzstrahl wird an dem Spiegel reflektiert und als Spiegelstrahl zu dem Strahlteiler geleitet. Der jeweilige Objektstrahl und der korrespondierende Spiegelstrahl interferieren nach Auftreffen auf den Strahlteiler und werden als Auswertungsstrahl je einer Detektoreinheit zum Auswerten zugeführt.

Die Signalauswerteeinheit ermittelt die Intensitäten der beiden Auswertungsstrahlen und ermittelt durch Nutzung der Intensitäten der beiden Auswertestrahlen ein Höhenprofil der Oberfläche. Für das Höhenprofil wird der Einfluss des Reflexionsgrades der Oberfläche auf die gemessenen Intensitäten rechnerisch kompensiert. Dadurch lässt sich für Objektoberflächen mit nicht 100% Reflexion sowie für Objektoberflächen mit unterschiedlichen Reflexionskoeffizienten innerhalb eines zu vermessenden Bereichs ein korrektes Profil ermitteln.

Gemäß einem anderen Aspekt der vorliegenden Erfindung umfasst das System zum Erfassen des Oberflächenprofils einer Objektoberfläche eines Objekts mittels interferometrischer Abstandsmessung eine Lichtquelle zum Erzeugen eines monochromatischen Lichtstrahls und die oben beschriebene optische Vorrichtung.

Erfindungsgemäß weisen die beiden Auswertungsstrahlen, die auf die Detektoreinheit treffen, einen Phasenunterschied auf, aus dem auf das Oberflächenprofil einer Objektoberfläche eines Objekts geschlossen werden kann. Bei bisherigen Anordnungen, die ebenfalls auf der interferometrischen Abstandsmessung basieren, wird eine sogenannte optische Falle verwendet, um nach Aufspaltung eines Lichtstrahls in zwei Teilstrahlen wenigstens einen Teilstrahl zu absorbieren. Die bekannten Anordnungen sind so ausgebildet, dass einer Detektoranordnung ein nicht interferierender Strahl und ein interferierender Strahl zugeleitet werden. Aus der Auswertung der beiden unterschiedlichen Strahlarten wird dann auf ein Höhenprofil geschlossen.

Im Rahmen der Erfindung wurde jedoch erkannt, dass es gerade auch möglich ist, zwei interferierende Lichtstrahlen mit einer Detektoreinheit auszuwerten und aus den Messergebnissen mittels einer Signalauswerteeinheit die Höhenprofile zu erfassen. Die Detektoreinheit hat zwei Detektoren, bevorzugt Sensoren oder Kameras. Eine derartige erfindungsgemäße Anordnung hat den Vorteil, dass keine optische Falle (Lichtfalle) verwendet werden muss. Eine optische Falle ist ein optisches Element, das die auftretende Strahlung vollständig absorbiert. Dies lässt sich in der Praxis nur sehr aufwendig und mit großen Schwierigkeiten herstellen. Gelingt es nicht, nahezu die gesamte Strahlung zu absorbieren, gibt es Störeffekte, die die Messung beeinflussen und das Ergebnis verfälschen können.

Im Rahmen der Erfindung wurde weiter erkannt, dass bei der Verwendung von zwei interferometrischen, also interferierenden Strahlen diese einen Phasenunterschied aufweisen müssen, um eine Auswertung zu ermöglichen. Bevorzugt ist der Phasenunterschied ungleich einem ganzzahligen Vielfachen der verwendeten Wellenlänge.

Die erfindungsgemäße Vorrichtung und das erfindungsgemäße System weisen den Vorteil auf, dass durch die Verwendung von zwei Auswertungsstrahlen mit einem Phasenversatz bzw. einem Phasenunterschied, der bevorzugt fest ist, auch Objekte vermessen werden können, deren Oberfläche eintretendes Licht nicht zu 100 % reflektiert. Somit lassen sich insbesondere auch Oberflächen vermessen, die einen unterschiedlichen Reflexionsgrad in Teilen ihrer Oberfläche aufweisen. Beispielsweise ist dies bei Objekten der Fall, die unterschiedliche Dicken oder unterschiedliche Materialien aufweisen. Insbesondere Wafer in der Halbleiterindustrie weisen lokal eine Vielzahl von unterschiedlichen Materialkombinationen auf, die zum Teil auch teildurchlässige Mehrfachschichten bilden. Derartige Dicken und Materialkombinationen sind mittels der erfindungsgemäßen Vorrichtung und des erfindungsgemäßen Systems genau und schnell ausmessbar.

Erfindungsgemäß wird aus jedem der beiden Teilstrahlen ein Referenzstrahl erzeugt. In einer bevorzugten Ausführungsform wird der Phasenunterschied also dazu erzeugt, dass jeder der Referenzstrahlen (erster Referenzstrahl vom ersten Teilstrahl und zweiter Referenzstrahl vom zweiten Teilstrahl) auf einen Spiegel, z.B. mit zwei Spiegelsegmenten oder Teilspiegeln oder Spiegeln, auftrifft und dort reflektiert wird, wobei die Spiegel oder Spiegelsegmente unterschiedliche Positionen aufweisen. Vorzugsweise sind die Spiegelflächen parallel zueinander angeordnet, wobei die Position der Spiegeloberfläche in Richtung der Flächennormalen unterschiedlich ist. Die Spiegel weisen also einen Versatz in Richtung der Flächennormalen auf. Hierdurch kommt es zu Laufzeitunterschieden zwischen den Referenzstrahlen beziehungsweise den reflektierten, sogenannten Spiegelstrahlen, was zu dem Phasenunterschied führt.

Im Gegensatz zur optischen Falle, bei der der größte Teil der Strahlung absorbiert wird, wird bei dem Spiegel der größte Teil der Strahlung reflektiert. Wenigstens 30 % der Strahlung werden reflektiert, bevorzugt wenigstens 50 %, sehr bevorzugt wenigstens 80 %, besonders bevorzugt wenigstens 95 %.

In einer bevorzugten Ausführungsform wird ein Spiegel verwendet, der zwei parallele Spiegelsegmente umfasst, deren Spiegeloberfläche ebenfalls in Richtung der Normalen versetzt sind. Alternativ können die Spiegelsegmente eigene Spiegel sein. Es ist auch möglich, die Spiegeloberfläche auf ein optisches Element, beispielsweise einen transparenten Block, einen Glasblock oder Plexiglasblock, aufzubringen, z. B. aufzudampfen.

In einer besonders bevorzugten Ausführungsform sind der Strahlteiler und der Spiegel der erfindungsgemäßen Vorrichtung in einem optischen Element integriert. Beispielsweise kann das optische Element aus einem transparenten Material oder einem Glasblock gebildet sein. Beispielsweise könnte das optische Element aus zwei transparenten Blöcken bestehen, die jeweils eine dreieckige Grundfläche aufweisen, bevorzugt eine gleichseitige und rechtwinklige Grundfläche.

Einer der Blöcke kann so ausgebildet sein, dass die Seitenfläche an einer der Katheten des dreieckigen Grundrisses einen Versatz aufweist, wobei die Außenflächen parallel, jedoch in Richtung ihrer Normalen versetzt sind. Auf diese beiden Versatzflächen, die vorzugsweise gleichgroß sind und bevorzugt parallel ausgerichtet sind, können die Spiegel bzw. Spiegelsegmente angebracht werden. Vorzugsweise sind die Spiegel auf den transparenten Block und ihren Versatzflächen aufgedampft oder aufgebracht.

Werden beide transparenten Blöcke derart aneinandergefügt, dass ihre Langseitenflächen, die der Seitenfläche an der Hypotenuse der dreieckigen Grundfläche entsprechen, aneinander gebracht und kontaktiert werden, so kann ein Strahlteiler gebildet werden. Beispielsweise können die beiden transparenten Blöcke miteinander verklebt werden. Eine oder beide der Langseitenflächen können mit einem teildurchlässigen Spiegel versehen sein.

In einer bevorzugten Ausführungsform umfasst die Lichtquelle einen Laser, der monochromatisches Licht erzeugt. Werden mehrere Lichtquellen verwendet, deren Lichtstrahlen vorzugsweise gebündelt werden, umfassen die Lichtquellen je einen Laser.

In einer bevorzugten Ausführungsform werden mehrere Lichtquellen verwendet, die jeweils einen monochromatischen Lichtstrahl erzeugen. Vorzugsweise weisen die Lichtstrahlen der einzelnen Lichtquellen unterschiedliche Wellenlängen auf. Bevorzugt hat keine der Lichtquellen eine Wellenlänge, die ein ganzzahliges Vielfaches der Wellenlänge einer anderen Lichtquelle aufweist. Die Lichtstrahlen der einzelnen Lichtquellen haben also unterschiedliche Wellenlängen, die vorzugsweise kein ganzzahliges Vielfaches einer Wellenlänge eines anderen Lichtstrahls sind.

In einer bevorzugten Ausführungsform mit mehreren Lichtquellen werden die Lichtstrahlen der einzelnen Lichtquellen in einem Strahlkoppler gebündelt, sodass die austretenden Lichtstrahlen die Lichtstrahlen aller Lichtquellen umfassen. Beispielsweise können die unterschiedlichen Lichtquellen Lichtstrahlen in unterschiedlichen Farben erzeugen.

In einer bevorzugten Ausführungsform umfasst der Strahlteiler einen halbdurchlässigen Spiegel, der einen Teil eines auftreffenden Lichtstrahls als Referenzstrahl passieren lässt und einen anderen Teil eines auftreffenden Lichtstrahls als Messstrahl in Richtung der Objektoberfläche eines Objekts reflektiert und somit ablenkt. Bevorzugt erfolgt eine 50%-Aufteilung des Lichtstrahls in Referenzstrahl und Messstrahl.

Vorzugsweise umfasst die Detektoreinheit des erfindungsgemäßen Systems eine Time-delayed-Integration-Kamera, eine sogenannten TDI-Kamera, die bevorzugt eine TDI-Zeilenkamera ist. In einer bevorzugten Ausführungsform wird eine Farb-TDI-Kamera bzw. Farb-TDI-Zeilenkamera verwendet. Besonders bevorzugt hat die Detektoreinheit eine TDI-Mehrkanalzeilenkamera, die farbig oder monochrom sein kann.

Bei einer Aufspaltung der Lichtstrahlen von der Lichtquelle oder den Lichtquellen in zwei Teilstrahlen werden vorzugsweise zwei Kameras oder Zeilenkameras, bevorzugt TDI-Kameras, in der Detektoreinheit verwendet. Da durch die Anordnung insgesamt aus zwei Teilstrahlen und deren jeweilige Aufspaltung in Referenzstrahl und Messstrahl und spätere Überlagerung der reflektierten Spiegelstrahlen bzw. Objektstrahlen zu Auswertungsstrahlen wiederum zwei Strahlen vorliegen, wird je ein Strahl zu je einer Kamera geleitet.

In einer weiter bevorzugten Ausführungsform ist ein optisches Element vorgesehen, das die gebündelten Lichtstrahlen, insbesondere die gebündelten Auswertungsstrahlen, auftrennt. Das optische Element ist derart angeordnet, dass die Auftrennung der Lichtstrahlen vor dem Auftreffen auf die Detektoreinheit und deren Kameras erfolgt. Die Auftrennung der gebündelten Lichtstrahlen, beispielsweise der gebündelten Auswertungsstrahlen, kann vor oder nach Trennung der beiden Auswertungsstrahlen und Leitung zu den jeweiligen Kameras erfolgen. Es ist auch möglich, nach Trennung der Auswertungsstrahlen und direkt vor Eintritt der Strahlen in die jeweilige Kamera ein Auftrennen der gebündelten Lichtstrahlen durchzuführen. Eine Auftrennung ist dann vorteilhaft, wenn Kameras verwendet werden, die für die einzelnen Lichtstrahlen und deren Wellenlängen sensitiv sind. Bei der Verwendung von Mehrkanalzeilenkameras oder Farb-TDI-Kameras kann auf eine derartige Auftrennung und ein derartiges optisches Element zum Auftrennen verzichtet werden.

Erfindungsgemäß wird die Aufgabe auch dadurch gelöst, dass die Lichtquelle das zu vermessende Objekt mit Lichtstrahlen mit mindestens einer monochromatischen Wellenlänge kontinuierlich beleuchtet;

die Relativbewegung zwischen der kombinierten Detektoreinheit (sogenannte Kamera-/Interferometeranordnung) und dem Objekt kontinuierlich und ohne Unterbrechung erfolgt;

ein feststehender, geeignet strukturierter Referenzspiegel einen Phasenversatz zwischen zwei Teilstrahlen der Lichtquelle erzeugt;

mit den Detektoren der Detektoreinheit (z.B. den Kamerasensoren der Interferometeranordnung) die Intensität beider Teilstrahlen des jeweils durch Interferenz des vom Objekt reflektierten Lichtes (Objektstrahl) mit dem an dem Referenzspiegel reflektierten Lichtes (Spiegelstrahl) entstandenen Lichtes (Auswertungsstrahl) bei allen genutzten Wellenlängen gleichzeitig gemessen wird;

die gemessene Intensität des ersten Teilstrahl-Interferenzsignals (erster Auswertungsstrahl) mittels der gemessenen Intensität des um den festen Referenzphasenversatz modifizierten zweiten Teilstrahl-Interferenzsignals (zweiter Auswertungsstrahl) bei jeder Wellenlänge korrigiert wird; und

der Abstand zum Objekt aus den korrigierten Interferenzsignalintensitäten des ersten Teilstrahl-Interferenzsignals (erster Auswertungsstrahl) berechnet wird.

Bei einer solchen Anordnung werden als Detektoren vorzugsweise Zeilensensoren für die Interferometriemessung benutzt. Dadurch kann ein breiter Streifen des Objektes kontinuierlich vermessen werden. Ein Aspekt der Erfindung ist auch die Korrektur des Einflusses der unterschiedlichen Oberflächenmaterialien des zu vermessenden Objektes. Um den Messbereich auf die für die zu messenden Profilhöhen notwendigen Bereiche zu erweitern, wird vorgeschlagen, in dem erfindungsgemäßen System mehrere Wellenlängen gleichzeitigen zu nutzen.

Im Rahmen der Erfindung wurde erkannt, dass aus der Intensitätsmessung eines durch Interferometrie modulierten Signals der Abstand zum Messobjekt mit sehr hoher Auflösung eindeutig ermittelt werden kann. Dies gilt jedoch nur, wenn die Oberfläche des Messobjektes das benutzte Licht zu 100% reflektiert oder der Reflexionsgrad für jeden Messpunkt genau bekannt ist. Weist das Messobjekt teildurchlässige Schichten auf, so muss man für eine absolute Abstandsmessung deren Dicken und optischen Eigenschaften (Brechungsindex und Absorptionskoeffizient) bei der genutzten Wellenlänge ebenso für jeden Messpunkt genau kennen. Für eine relative Profilmessung könnte man zwar auf die genaue Kenntnis dieser Werte verzichten, wäre jedoch darauf beschränkt, dass die Dicken und Materialien für alle Messpunkte genau gleich sein müssen, bzw. ihre Variation die Messgenauigkeit begrenzen.

Um das Oberflächenprofil einer Objektoberfläche eines Objekts, insbesondere Höhenmessung auf einem Wafer durchzuführen, ist die Interferometrie daher nicht ohne weiteres einsetzbar, da die Intensität der gemessenen Interferometriesignale zusätzlich vom Material der zu messenden Struktur und ihrer Umgebung abhängt. Beispielsweise weisen die zu messenden Wafer lokal eine Vielzahl von unterschiedlichen Materialkombinationen auf, welche zum Teil auch durch teildurchlässige Mehrfachschichten gebildet werden, deren Dicken- und Materialvariation eine genaue, schnelle Messung mit einer oder wenigen Wellenlängen unmöglich machen. Ohne die Kenntnis des lokalen Reflexionsgrades und des durch die teildurchlässigen Schichten erzeugten Phasenversatzes des reflektierten Lichtes (Auswertungsstrahl) kann keine ausreichend genaue Aussage zum Abstand getroffen werden.

Um den Einfluss der materialbedingten lokalen Variation der Intensität des reflektierten Lichtes zu korrigieren wird erfindungsgemäß die Interferometriemessung mit mindestens zwei Teilstrahlen, welche sich durch einen festen Phasenversatz unterscheiden, gleichzeitig durchgeführt.

Nutzt man zwei Teilstrahlen kann man die Genauigkeit der Messung bereits signifikant erhöhen, da sich der Einfluss des Reflexionsgrades eliminieren lässt. Dies ist für viele Aufgaben bereits ausreichend, z.B. in dem Fall das auf dem Messobjekt keine teildurchlässigen Schichten vorhanden sind oder deren Einfluss vernachlässigt werden kann.

Der Einsatz von mehr als zwei Teilstrahlen kann zur Verbesserung der Robustheit der Messung durch Erhöhung der Daten-Redundanz genutzt werden.

Nachfolgend wird beispielhaft mit Bezug auf eine Höhenmessung an einem Wafer und ohne Einschränkung der Allgemeinheit die Korrektur für ein einzelnes Detektorelement und für eine einzelne Wellenlänge $\lambda_1$ dargestellt. Um die Profilmessung mit hoher Geschwindigkeit zu realisieren, werden vorteilhafterweise Zeilenkameras mit mehreren Detektorzeilen eingesetzt. Das am Interferometrie-Detektor ankommende Signal Si kann dargestellt werden als

$$S_i = q * R * \gamma * \left[ 1 + \cos\left(\frac{2\pi}{\lambda_{1/2}}(z_{ri} - z_s - \varphi)\right) \right] \quad (1)$$

Hierbei bezeichnet q die Intensität der Lichtquelle, R der effektive Reflexionskoeffizient der Oberfläche des Messobjektes bei der Wellenlänge $\lambda_i$, y eine Gerätekonstante, die sich aus Detektorsensitivität, Absorptions- und Reflexionsverlusten an den Optiken ergibt sowie $z_{ri}$ und $z_s$ die Abstände zwischen dem Teilerspiegel des Interferometers und dem Referenzspiegel bzw. der Oberfläche des Messobjektes und $\varphi$ die Phasenverschiebung die ggf. durch teildurchlässige Schichten auf der Messobjektoberfläche erzeugt wird.

Für den Fall vernachlässigbarer Phasenverschiebung $\varphi \sim 0$ ergibt sich durch Kombination zweier Teilstrahlbündel i = 1,2 für das Verhältnis der gemessenen Intensitäten:

$$\frac{S_2}{S_1} = \frac{1 + \cos\left(\frac{2\pi}{\lambda_{1/2}}(z_{r2} - z_s)\right)}{1 + \cos\left(\frac{2\pi}{\lambda_{1/2}}(z_{r1} - z_s)\right)} \quad (2)$$

Dies lässt sich mit

$$\Delta z_r = z_{r1} - z_{r2} \quad , \qquad \Delta z = z_{r1} - z_s \quad \text{und} \qquad p = \frac{2\pi}{\lambda_{1/2}}$$

umformen, in:

$$\frac{S_2}{S_1} = \frac{1+\cos\left(p(\Delta z-\Delta z_r)\right)}{1+\cos\left(p\Delta z\right)} \tag{3}$$

Zur Ermittlung des gesuchten realen Abstandes der Oberfläche des Messobjektes ist $\Delta z$ durch Lösung der transzendenten Gleichung zu bestimmen. Da $\Delta z_r$ eine bekannte Größe ist (bzw. durch eine Eichmessung mit einem ebenen Spiegel anstelle des Messobjektes ermittelt werden kann) kann damit das Oberflächenprofil des Messobjektes ermittelt werden, solange es keine senkrechten Stufen aufweist, welche größer als die halbe Wellenlänge des verwendeten Lichtes sind.

Bei Nutzung nur einer Wellenlänge für die Interferomtriemessung und der bisher dargestellten erfindungsgemäßen Lösung bleibt der Abstands-Arbeitsbereich der Messung auf eine halbe Wellenlänge des benutzten Lichtes eingeschränkt. Außerhalb dieses Bereiches wird der Zusammenhang zwischen Intensität und Abstand mehrdeutig, da aus der Signalintensität allein nicht unmittelbar ermittelt werden kann wie viele Perioden der Wegunterschied zwischen Referenzstrahl und Objektstrahl beträgt. Herkömmliche Interferometer lösen dies durch Ermittlung eines Referenzabstandes bei der Initialisierung und anschließender ununterbrochener Zählung der gemessenen Intensitätsperioden. Dies ist für die erfindungsgemäße Nutzung eines zeilenartigen Interferometers jedoch ungeeignet, da eine Referenz zur Verfügung stehen müsste, die auf besser als eine halbe Wellenlänge parallel zur Interferometer-Zeilenanordnung ist und es keine Stufen auf dem Messobjekt von mehr als einer halben Wellenlänge Höhe geben dürfte. Zumindest letzteres ist aber z.B. für die Vermessung der Kontaktstrukturen auf Wafern nicht gegeben.

Nutzt man hingegen zwei oder mehr unterschiedliche Wellenlängen lässt sich der Arbeitsbereich erweitern innerhalb dessen die Messung ohne Start-Referenz und Periodenzählung eindeutig erfolgen kann, da die verschiedenen Wellenlängen eine unterschiedliche Periodizität aufweisen und somit aus der Kombination der Signale der genutzten Wellenlängen in einem weiteren Bereich eine eindeutige Messung erfolgen kann. Grundlagen eines solchen Verfahrens sind in "Multi-Wavelength Interferometry for Length Measurements Using Diode Lasers" von K. Meiners-Hagen et all dargestellt. Der unmittelbar erfassbare Arbeitsbereich A beträgt für zwei Wellenlängen $\lambda_1$ und $\lambda_2$ :

$$A = \Lambda/2 = \frac{1}{2} * \frac{\lambda_1 * \lambda_2}{\lambda_2 - \lambda_1} \tag{4}$$

Betrachtet man nicht nur den Gesamtintensitätsverlauf der synthetisierten Wellenlänge A, sondern die beiden beide Wellenlängen $\lambda_1$ und $\lambda_2$ jeweils für sich, lässt sich der Arbeitsbereich A auf ein Vielfaches der Wellenlängen $\lambda_1$ und $\lambda_2$ ausdehnen (Methode der exakten Phasenbruchteile).

Das in der o.g. Veröffentlichung dargestellte Verfahren ist jedoch für eine Höhenmessung auf einem Wafer so nicht einsetzbar, da die Intensität der gemessenen Interferometriesignale zusätzlich vom Material der zu messenden Struktur und ihrer Umgebung abhängt. Das oben dargestellte erfindungsgemäße Verfahren löst dieses Problem.

Mit Hilfe der gleichzeitig gemessenen zwei, phasenversetzten Interferometriesignale können die Interferometrie-Messungen bei den verschiedenen Wellenlängen jede für sich korrigiert werden. Die Materialabhängigkeit wird dadurch eliminiert. Anschließend kann innerhalb des eindeutigen Arbeitsbereiches wie in o.g. Veröffentlichung dargestellt der Abstand für jeden mit der Zeilensensoranordnung aufgenommen Punkt einzeln berechnet werden. Es entsteht somit ein präzises Abstandsbild der Oberfläche. Durch den Einsatz von Zeilensensoren mit hohen Taktraten kann eine sehr hohe Messgeschwindigkeit erreicht werden.

Mit der erfindungsgemäßen Vorrichtung und System können Profile von bis zu einigen $100\mu m$ Höhe mit einer Auflösung bis unterhalb $0,1\ \mu m$ erfasst werden. Dies ist insbesondere für viele Anforderungen bei Messung der eingangs beschriebenen Halbleiter-Chips und Wafer ausreichend. Anwendungen sind z.B.: die Vermessung der Höhen der Kontaktstrukturen (Lötkugeln oder Zylinder), Vermessung der Höhe von Leiterbahnen der obersten Verdrahtungsebene der Chips oder die Bestimmung der Planarität auf rekonstruierten Wafern (Wafer, welche durch eine Einbettung von zuvor vereinzelten Chips in ein Trägermaterial, i.d.R. Epoxid zusammengesetzt werden). Analoge Aufgabenstellungen bestehen auch für andere Strukturen und in anderen Industriezweigen. Solche Aufgaben sind z.B. die Vermessung von Strukturen auf Elektronik-Boards und Leiterplatten oder die Vermessung einer Vielzahl von mechanisch-elektrischen Systemkomponenten (MEMS) wie Drucksensoren, Geschwindigkeitssensoren oder Gyroskope.

Die Anordnung ermöglicht bei geeigneter Beleuchtung des Messbereichs auf der Objektoberfläche und bei Verwendung von geeigneten Zeilen- oder Flächendetektoren die simultane Messung an mehreren Punkten. Anders als beispielsweise bei der Weißlichtinterferometrie wird das Messergebnis bereits durch eine einzige Messung bei verschiedenen Wellenlängen erreicht, ohne dass Objekt oder Detektor in ihrem Abstand verändert werden müssen. Dadurch wird die Messung erheblich beschleunigt.

Vorzugsweise ist eine Aufnahmevorrichtung zur Aufnahme eines Objekts in Form eines Wafers oder eines anderen flachen Objekts mit einer ebenen Objektoberfläche vorgesehen. In der Aufnahmevorrichtung wird das zu vermessende flache Objekt gerade so positioniert, dass die Objektoberfläche mit dem Messlicht in gewünschter Weise beleuchtet wird.

Als Strahlungsquellen können Laser genutzt werden, da sie hinreichend monochromatisches Licht mit hoher Strahlungsintensität bereitstellen. Wegen ihrer hohen Strahlungsintensität innerhalb eines sehr kleinen Wellenlängenbereichs sind Laser als Strahlungsquellen für die vorliegende Erfindung besonders geeignet. Es kann jedoch auch eine oder mehrere spektral breitbandige Strahlungsquelle(n) benutzt werden, welche mit entsprechend Spektralfilter(n) versehen ist (sind). Die Verwendung mehrerer Spektralfilter ermöglicht es auch, mehrere Wellenlängen aus einer Strahlungsquelle zu erzeugen.

Insbesondere kann bei der Erfindung vorgesehen sein, dass die Strahlungsquellen Licht bei Wellenlängen erzeugen, bei denen keine Wellenlänge ein ganzzahliges Vielfaches der Wellenlänge einer der anderen Strahlungsquellen ist. Eine Wellenlänge ist beispielsweise nicht genau das Doppelte der Wellenlänge einer anderen Strahlungsquelle. Je geringer die Differenz der Wellenlängen ist, umso größer wird der Arbeitsbereich. Allerdings ist in der Praxis zu berücksichtigen, dass die Strahlungsbündel nie völlig monochromatisch sind und immer eine Bandbreite haben, welche bei der Auswahl der Wellenlängen zu berücksichtigen ist.

Die Zusammenführung der Strahlung bei Nutzung von verschiedenen Wellenlängen kann durch verspleiste Lichtwellenleiter oder dichroitische Spiegel erfolgen. Verspleiste Lichtwellenleiter sind Lichtwellenleiter, die in einem bestimmten Abschnitt miteinander verschmolzen sind oder eng nebeneinander geführt werden, so dass das Licht von einem Lichtwellenleiter in den anderen Lichtwellenleiter übertritt. Bei dichroitischen Spiegeln wird nur das Licht eines bestimmten Wellenlängenbereiches reflektiert, während das Licht mindestens eines anderen Wellenlängenbereiches hindurchgelassen wird. Solche Spiegel können für den Einsatz bei verschiedenen Winkeln dimensioniert sein. Die häufigste Nutzung geschieht bei 45°. Bei geeigneter Anordnung kann so das abgehende reflektierte Licht und das durchgelassene Licht die gleiche Ausbreitungsrichtung besitzen.

Die für die Anordnung (Vorrichtung und System) erforderliche Phasendifferenz von Strahlenbündeln kann sowohl durch eine Wegdifferenz, des von den Lichtbündeln zurückzulegenden Weges als auch durch den Durchgang oder die Reflektion an unterschiedlichen Medien erzeugt werden.

Für die Trennung der Lichtstrahlen unterschiedlicher Wellenlänge können ein oder mehrere Prismen, Gitter oder andere spektral dispersiven Elemente genutzt werden. Durch die räumliche Trennung können die Signale simultan aufgenommen werden, was eine hohe Messgeschwindigkeit erlaubt. Es kann aber auch eine zeitliche Trennung durch Nacheinanderausführung der Messung bei den verschiedenen Wellenlängen erfolgen, wobei eine größere Messzeit in Kauf genommen wird.

Eine besonders bevorzugte Ausgestaltung der Erfindung sieht vor, dass jede der Detektoranordnungen eine mehrkanalige Time-Delayed-Integration-(TDI)-Zeilenkamera umfasst. Diese Kameras umfassen mehrere TDI-Blöcke die jeweils für einen bestimmten Wellenlängenbereich sensitiv sind. Somit kann die TDI-Anordnung zur Erzeugung eines hohen Signal-Rauschabstandes genutzt werden und gleichzeitig können alle benutzten Wellenlängen simultan gemessen werden. Damit ist eine besonders schnelle und sehr präzise Messung möglich. Ebenso können aber auch einkanalige TDI-Zeilenkameras im sogenannten Area-Mode, also wie eine normale Flächenkamera benutzt werden, indem die benutzten unterschiedlichen Wellenlängen durch ein dispersives Element, beispielsweise ein Prisma, über die Sensorfläche verteilt werden. Dadurch kann die große Breite der TDI-Detektorzeile von z.B. 16384 Pixeln für einen hohen Durchsatz genutzt werden und gleichzeitig stehen die z.B. 48, 96 oder 256 Zeilen der TDI für die gleichzeitige, separate Aufnahme der verschiedenen Wellenlängen zur Verfügung. Bei dieser Anordnung ist eine geringere Messgeschwindigkeit durch den geringeren Takt in diesem Flächenauslesemodus verfügbar. Gleiches gilt für die ebenfalls mögliche Nutzung von normalen Flächenkameras.

Insbesondere kann vorgesehen sein, dass die optische Vorrichtung, mit der die Interferenz erzeugt wird, einen halbdurchlässigen Spiegel umfasst, welcher einen Teil der Strahlung an einer ersten Oberfläche in Richtung auf die Objektoberfläche reflektiert (Messstrahl) und einen anderen Teil der Strahlung durchlässt (Referenzstrahl). Die reflektierte Strahlung kann anschließend mit dem durchgelassenen Strahl vereinigt werden. Dies kann beispielsweise erfolgen, indem der durchgelassene Strahl (Referenzstrahl) an einem Spiegel in sich zurückreflektiert wird (als Spiegelstrahl) und an dem halbdurchlässigen Spiegel in den reflektierten Strahl (Objektstrahl) eingekoppelt wird. Eine solche Anordnung nennt man Michelson-Interferometer. Es sind jedoch auch andere Anordnungen verwendbar, wie z.B. ein sogenanntes Mach-Zehnder-Interferometer, bei dem das eingestrahlte Licht aufgeteilt und nach der Reflektion eines Teilstrahles an der Probenoberfläche wiedervereinigt wird.

Das erfindungsgemäße Verfahren zum Erfassen des Oberflächenprofils einer Objektoberfläche (30) eines Objekts mittels interferometrischer Abstandsmessung umfasst mehrere Schritte, wie Aussenden eines monochromatischen Lichtstrahls mittels einer Lichtquelle in Richtung einer optischen Vorrichtung, Aufspalten des Lichtstrahls der Lichtquelle in einen ersten und zweiten Teilstrahl mittels eines Strahlaufspalters, Aufteilen jedes Teilstrahls in einen Referenzstrahl und einen Messstrahl, bevorzugt mittels eines Strahlteilers, Leiten der Referenzstrahlen zu einem Spiegel, Reflektieren der Referenzstrahlen an dem Spiegel und Bilden von Spiegelstrahlen, welche einen Phasenversatz aufweisen. Die Spiegelstrahlen werden zu dem Strahlleiter geleitet und an ihm reflektiert. Die Messstrahlen werden auf einen Messbereich auf der Objektoberfläche geleitet und dort reflektiert, wodurch Objektstrahlen gebildet werden, die zu dem Strahlleiter geleitet werden. In weiteren Schritten interferieren die Spiegelstrahlen und Objektstrahlen und bilden Auswertungsstrahlen, die eine Phasenversatz aufweisen. Ein Schritt sieht vor, die Auswertungsstrahlen zu detektieren, bevorzugt mittels einer Detektoreinheit, auszuwerten und bevorzugt mittels einer Signalauswerteeinheit das Oberflächenprofil der Objektoberfläche zu ermitteln. Dabei werden die zwei gemessenen Intensitätswerte der Auswertestrahlen, welche beide vom selben Ort auf der Objektoberfläche reflektiert wurden, genutzt, um den Einfluss des Reflexionsgrades der Lichtstrahlen an der Objektoberfläche beim Ermitteln des Oberflächenprofils zu kompensieren. Auf diese Weise wird ein korrektes Profil der Oberfläche ermittelt, zum einen für Objektoberflächen mit nicht 100% Reflexion und zum anderen für Objektoberflächen mit unterschiedlichen Reflexionskoeffizienten innerhalb des zu vermessenden Bereichs.

Erfindungsgemäß wird mitels des Verfahrens ein monochromatisches Inspektionsbild für jede Wellenlänge aus den ermittelten Reflexionskoeffizienten der Objektoberfläche erstellt . Dabei werden die Reflexionskoeffizienten aus dem zuvor ermittelten Höhenprofil und der gemessenen Signalintensität mindestens einer der Strahlen (Auswertungsstrahlen) berechnet. Besonders bevorzugt werden jedoch die Signalintensitäten beider Auswertungsstrahlen genutzt.

Im Nachfolgenden wird das Verfahren ohne Beschränkung der Allgemeinheit am Beispiel der Wafer erläutert. Es kann jedoch in gleicher Weise für andere flache Objekte oder Prüfobjekte zur Vermessung von Oberflächenprofilen und Profilen eingesetzt werden.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere kann das Verfahren für die Vorrichtung und das System zum Erfassen des Oberflächenprofils einer Objektoberfläche eines Objekts mittels interferometrischer Abstandsmessung entsprechend den in den abhängigen Ansprüchen beschriebenen Ausgestaltungen ausgeführt sein.

Im Folgenden wird ein Ausführungsbeispiel der Erfindung unter Bezugnahme auf die beigefügten Abbildungen beschrieben. Es zeigen:

Fig. 1    eine schematische Darstellung eines erfindungsgemäßen Systems zur interferometrischen Abstandsmessung mit drei Laserlichtquellen;

Fig. 2    eine schematische Darstellung von Verfahrensschritte zur Einrichtung des Systems und zur interferometrischen Abstandsmessung.

Fig. 3    eine Detaildarstellung der von einem ersten Teilstrahl des Lichts zurückgelegten Weglängen und die zugehörigen Richtungen in einem vergrößerten Ausschnitt aus Figur 1;

Fig. 4    eine Detaildarstellung der von einem zweiten Teilstrahl des Lichts zurückgelegten Weglängen und die zugehörigen Richtungen in einem vergrößerten Ausschnitt aus Figur 1;

Fig. 5    eine schematische Darstellung einer ersten Ausführung des erfindungsgemäßen Systems gemäß Figur 1; und

Fig. 6    eine schematische Darstellung einer zweiten Ausführung des erfindungsgemäßen Systems gemäß Figur 1.

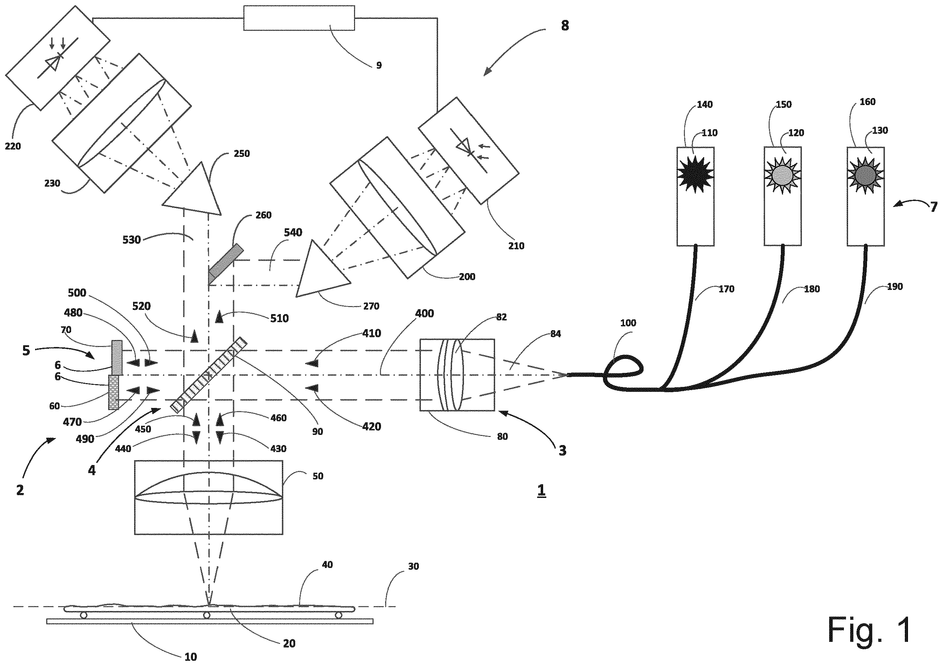

Fig. 1 zeigt eine Ausführung des erfindungsgemäßen Systems 1 mit einer optischen Vorrichtung 2, wenigstens einer Lichtquelle 7, einer Detektoreinheit 8 und einer Signalauswerteeinheit 9. Die optische Vorrichtung 2 umfasst einen Strahlaufspalter 3, einen Strahlteiler 4 und einen Spiegel 5. Der Spiegel 5 weist zwei Spiegelsegmente 6 auf, die wiederum in Form von zwei Spiegeln 60, 70 ausgebildet sind. Der Strahlaufspalter 3 ist bevorzugt als Strahlformungsoptik 80 ausgebildet. Der Strahlteiler 4 ist bevorzugt ein teildurchlässiger Spiegel 90 mit bevorzugt einer 50 %-Teildurchlässigkeit. Die wenigstens eine Lichtquelle 7 umfasst bevorzugt, wie hier gezeigt, drei Laserquellen 110, 120, 130.

Im Folgenden wird der Aufbau des Systems 1 und der Strahlengang in dem System 1 am Beispiel eines Wafers als Messobjekt beschrieben. In dem System 1 werden Wafer 20 oder andere flache Objekte, deren Oberflächenprofil erfasst werden soll, nacheinander relativ zu einer Kamera (Detektoreinheit 8) bewegt.

Im vorliegenden bevorzugten Ausführungsbeispiel ist die Kamera stationär und die Objekte werden unterhalb der Kamera hindurchbewegt. Dazu ist bevorzugt eine Halte- und Transporteinheit 10 vorgesehen, die die Wafer 20 lagert und bewegt. Die Bewegung erfolgt bevorzugt in einer Richtung senkrecht zur Flächennormalen der Objektoberfläche 30 des Wafers 20. In einem anderen Ausführungsbeispiel kann die Kamera bewegt werden. In einem alternativen Ausführungsbeispiel kann die Relativbewegung auf Kamera und Objekt aufgeteilt werden, so dass zum Beispiel die Kamera bevorzugt die Bewegung in einer Achsenrichtung ausführt, während das Objekt bevorzugt in der dazu senkrechten Richtung bewegbar ist. Die Bewegung zwischen Kamera und Objekt ist bevorzugt kontinuierlich.

Das Ausführungsbeispiel in Fig. 1 verwendet drei Laser als Lichtquellen 7 und zwei TDI-Mehrkanal-Zeilen-

**EP 4 004 486 B1**

kameras (TDI = time delayed integration) als Sensoren bzw. Detektoren der Detektoreinheit 8. Es kann jedoch auch eine andere Anzahl von Lichtquellen benutzt werden. Ebenso kann alternativ eine breitbandigere Lichtquelle in Kombination mit schmalbandigen Filtern benutzt werden.

Ebenso können anstelle der TDI-Sensoren auch einfache Mehrkanal-Zeilensensoren (ohne TDI-Verfahren) oder Flächenkameras oder ein Set von mehreren Zeilenkameras benutzt werden.

In Fig.1 sind zur Vereinfachung der Darstellung die Strahloffsets, welche beim Durchgang der Strahlen durch eine planparallele Platte erzeugt werden weggelassen. Im Ausführungsbeispiel in Fig. 1 wird das Licht der 3 Laserquellen 110, 120 und 130 durch einen Faserkoppler 100 vereint. In dem Faserkoppler 100 sind die 3, von den Laserquellen gespeisten Fasern 170, 180, 190 verspleißt, so dass das Licht der Laserquellen in einem gemeinsamen, mehrfarbigen Lichtstrahl 84 austritt. Die Übertragung über einen Lichtleiter dient lediglich der Entkopplung der Laser vom eigentlichen Aufnahmesystem. Anstelle der Lichtleiterübertragung können die Laser-Strahlen auch direkt über geeignete Optik in die Aufnahmeeinheit gelenkt werden, was Verluste reduziert, jedoch einen höheren Justageaufwand erfordert. Ebenso kann die Vereinigung der drei Strahlen aus den 3 Lasermodulen auch über dichroitische Spiegel erfolgen.

Mit der Strahlformungsoptik 80 wird der Lichtstrahl 84 zu einem parallelen Lichtbündel bestehend aus den beiden Bündelhälften, so genannten Teilstrahlen, 410 und 420 mit an die Aufnahmefläche angepasstem Querschnitt geformt. Die Bündelhälften 410 und 420 sind um die Strahlmittelachse 400 angeordnet. Sie müssen nicht zwingend aneinander angrenzen, d.h. es kann ein zentraler Bereich zwischen ihnen ungenutzt bleiben. Die Aufspaltung ist vorzugsweise aber nicht unbedingt zwingend symmetrisch. Dabei sind alle Wellenlängenanteile über den gesamten Querschnitt und insbesondere zwischen den Bündelhälften (Teilstrahlen) 410 und 420 gleichmäßig verteilt. Das Lichtbündel (bestehend aus den Teilstrahlen 410, 420) wird durch den 50% teildurchlässigen Spiegel 90 zum Teil als Teilbündel (Messstrahlen 430 und 440) über ein Objektiv 50 auf die zu messenden Waferoberfläche 40 gelenkt. Die anderen 50% des Lichtbündels (Teilstrahlen 410, 420) passieren den teildurchlässigen Spiegel 90 als Teilbündel (Referenzstrahlen) 470 und 480.

Die Referenzstrahlen 470 und 480 treffen auf die zwei Referenzspiegel 60 und 70, wo sie reflektiert werden. Die so entstehenden Teilbündel (Spiegelstrahlen 490 und 500) werden wieder zu 50% am teildurchlässigen Spiegel 90 reflektiert.

Die auf die Waferoberfläche 40 gelenkten Teilbündel, Messstrahlen 430 und 440, werden durch das Objektiv 50 in einem gemeinsamen Abbildungsgebiet fokussiert. Durch die Reflexion an der Waferoberfläche 40 werden sie durch das Objektiv 50 als Teilbündel (Objektstrahlen) 450 und 460 zurück reflektiert. Dabei umfasst der erste Objektstrahl 450 das reflektierte Licht des ersten Messstrahls 430 und der zweite Objektstrahl 460 das reflektierte Licht des zweiten Messstrahls 440. Jeweils die Hälfte des Lichtes aus den Objektstrahlen 450 und 460 passiert den teildurchlässigen Spiegel 90. Das aus dem ersten Objektstrahl 450 stammende Licht interferiert danach mit dem am teildurchlässigen Spiegel 90 reflektierten Licht des ersten Spiegelstrahls 490 in einem Lichtbündel zum ersten Auswertungsstrahl 520.

Der erste Auswertungsstrahl 520 ist nunmehr durch die Interferenz der Lichtwellen entsprechend des Abstandsunterschieds zwischen teildurchlässigem Spiegel 90 und Spiegel 60 einerseits sowie teildurchlässigem Spiegel 90 und Waferoberfläche 40 andererseits in seiner Intensität moduliert. Die Intensitätsmodulation erfolgt für alle drei enthaltenen Wellenlängen unabhängig voneinander.

In gleicher Weise entsteht ein Interferometriesignal aus dem Licht des zweiten Objektstrahls 460. Das aus dem zweiten Objektstrahl 460 stammende Licht interferiert nach Durchquerung des teildurchlässigen Spiegels 90 mit dem am teildurchlässigen Spiegel 90 reflektierten Licht des zweiten Spiegelstrahls 500 in einem Lichtbündel, dem zweiten Auswertungsstrahl 510.

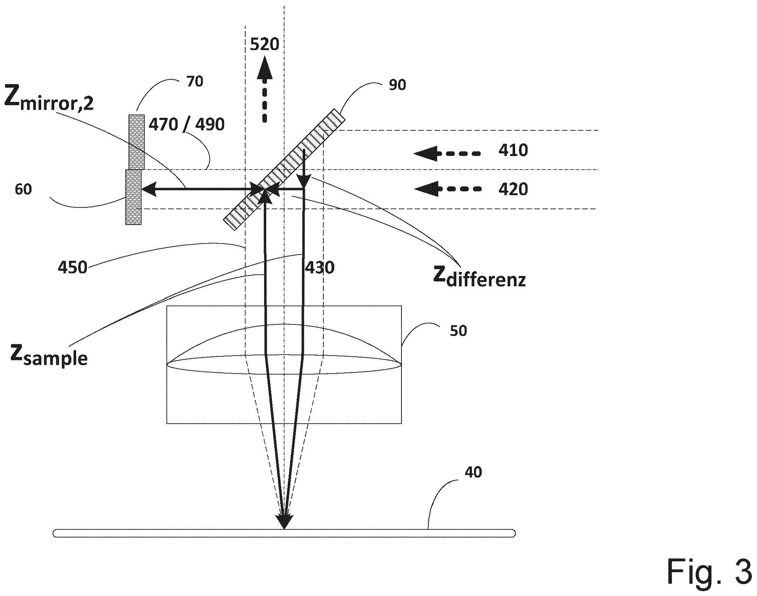

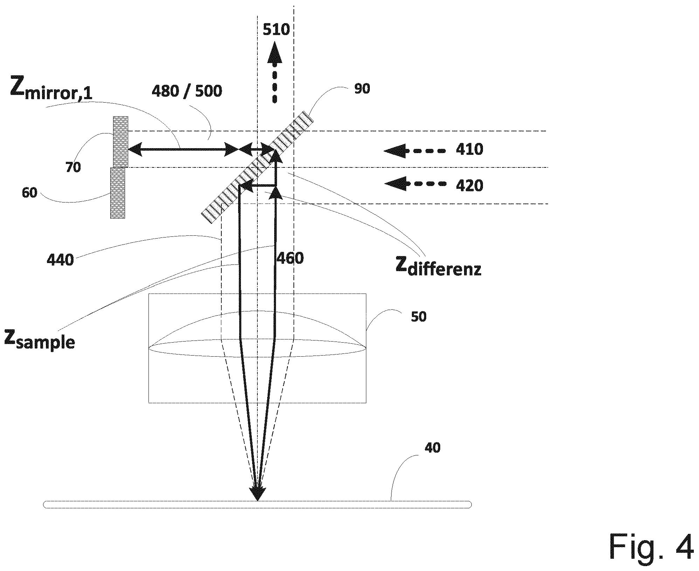

Der zweite Auswertungsstrahl 510 ist nunmehr durch die Interferenz der Lichtwellen entsprechend des Abstandsunterschieds zwischen teildurchlässigem Spiegel 90 und Spiegel 70 einerseits sowie teildurchlässigem Spiegel 90 und Waferoberfläche 40 andererseits in seiner Intensität moduliert. Die Intensitätsmodulation erfolgt ebenfalls für alle drei enthaltenen Wellenlängen unabhängig voneinander. Die Fig. 3 und 4 zeigen vergrößerte Ausschnitte aus Fig. 1 zur Veranschaulichung der Entstehung der Interferenz und den zu berücksichtigenden Wegunterschieden.

Die beiden Auswertungsstrahlen 510 und 520 unterscheiden sich in ihrer Intensität in den drei genutzten Wellenlängen. Die Intensitätsdifferenz jeder Wellenlänge für sich betrachtet wird ausschließlich durch den an den Spiegeln 60 und 70 erzeugten Phasenversatz bestimmt. Im dargestellten Ausführungsbeispiel wird der Phasenversatz durch einen unterschiedlichen Abstand der beiden Spiegel 60 und 70 vom teildurchlässigen Spiegel 90 erzeugt. Der Phasenversatz kann jedoch auch auf andere Weise erzeugt werden, z.B. durch eine Beschichtung eines der Spiegelsegmente 6 oder der Teilspiegel (z.B. Spiegel 70) mit einer transparenten Beschichtung.

Der zweite Auswertungsstrahl 510 wird durch Spiegel 260 als zweiter Detektionsstrahl 540 auf ein Prisma 270 gelenkt. Das Prisma 270 dient der spektralen Aufspaltung des Lichtes aus dem zweiten Detektionsstrahl 540 in die drei Wellenlängenkomponenten $\lambda_1$, $\lambda_2$ und $\lambda_3$. Es kann ohne Beschränkung der Allgemeinheit anstelle des Prismas 270 auch ein anderes, geeignetes dispersives Element, wie zum Beispiel ein Gitter verwendet werden. Die so aufgespaltenen spektralen Anteile aus dem zweiten Detektionsstrahl 540 werden durch eine erste Tubusoptik 200 auf eine TDI-Mehrkanal-Zeilenkamera 210 fokussiert. Bei Verwendung von TDI-Mehrkanal-Zeilenkameras mit vor den Sensorblöcken fest installierten Farbfiltern kann die spektrale Aufspaltung des Strahles auch entfallen.

Durch Aufzeichnung der auf jedem Pixel der Zeilenkamera 210 auftreffenden Lichtintensität werden somit drei Signale $i_{1,1}$, $i_{2,1}$ und $i_{3,1}$ erzeugt, die durch die Profilhöhe am jeweiligen Ort der Waferoberfläche 40 in ihrer Intensität moduliert sind und somit zur interferometrischen Bestimmung des Oberflächenprofils genutzt werden können. Hierbei steht der erste Index für die Wellenlänge und der zweite Index für die Kamera (210), die das Signal liefert.

Da Spiegel 260 nur den Weg des zweiten Auswertungsstrahls 510 blockiert, trifft der durch Interferenz intensitätsmodulierte erste Auswertungsstrahl 520 als erster Detektionsstrahl 530 ungehindert auf Prisma 250. Prisma 250 dient der spektralen Aufspaltung des Lichtes aus dem ersten Detektionsstrahl 530 in die drei Wellenlängenkomponenten $\lambda_1$, $\lambda_2$ und $\lambda_3$. Es kann ohne Beschränkung der Allgemeinheit anstelle des Prismas 250 auch ein anderes, geeignetes dispersives Element, wie zum Beispiel ein Gitter verwendet werden. Die so aufgespaltenen spektralen Anteile aus dem ersten Detektionsstrahl 530 werden durch eine zweite Tubusoptik 230 auf eine TDI-Mehrkanal-Zeilenkamera 220 fokussiert. Durch Aufzeichnung der auf jedem Pixel der Zeilenkamera 220 auftreffenden Lichtintensität werden somit drei Signale $i_{1,2}$, $i_{2,2}$ und $i_{3,2}$ erzeugt, die durch das Oberflächenprofil der Waferoberfläche 40 in ihrer Intensität moduliert sind und somit zur interferometrischen Bestimmung des Oberflächenprofils genutzt werden können.

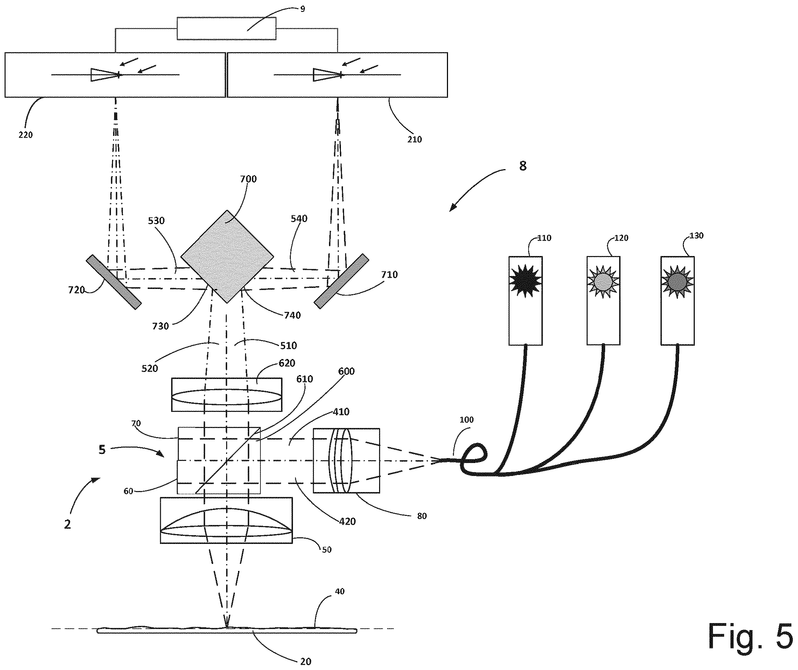

Fig. 5 zeigt eine alternative Ausführungsform des erfindungsgemäßen Systems, bei dem der Teilerspiegel 90 und die beiden Spiegel 60, 70 (Referenzspiegel) ersetzt werden durch ein Prisma 600, das aus zwei miteinander verklebten Blöcken besteht, wobei an der verklebten 45°-Fläche eine teilspiegelnde Schicht vorgesehen ist. Diese Schicht bildet den teildurchlässigen Spiegel 610, der die beiden Teilstrahlen 410, 420 aufspaltet, wie es der Spiegel 90 gemäß der Ausführungsform von Fig. 1 macht. Die Details und Strahlengänge der einzelnen Strahlen sind in Fig. 1 beschrieben und sind zur Übersichtlichkeit in Fig. 5 nicht mehr dargestellt.

Die gemäß der Ausführungsform von Fig. 1 vorhandenen beiden Spiegel 60, 70, die als Referenzspiegel dienen, sind auf der Außenfläche des Prismas 600 vorgesehen. Hierzu können beispielsweise Verspiegelungen auf die Außenfläche aufgedampft oder Spiegelflächen aufgebracht oder aufgeklebt werden.

Durch entsprechende Konstruierung des Prismas 600 kann der notwendige Versatz an der Außenfläche erzeugt werden, sodass die Spiegel 60, 70 den gleichen Versatz aufweisen, wie er in Fig. 1 gezeigt ist.

Nachdem die Spiegelstrahlen 490, 500 und die Objektstrahlen 450, 460 im Prisma 600 interferieren und die Auswertungsstrahlen 520 und 510 bilden, werden diese Strahlen mittels einer Bündeloptik 620 gebündelt und auf ein optisches Element 700 gelenkt. Das optische Element 700 hat bevorzugt eine rechteckige oder quadratische Grundfläche. An den beiden der Bündeloptik 620 zugewandten Seiten sind Verspiegelungen oder Spiegel 730, 740 angeordnet, die auftreffende Strahlen reflektieren. Die Spiegel 730, 740 können auch als eigenständige Spiegel oder spiegelnde Elemente ausgebildet sein; müssen dann aber ausgerichtet oder justiert werden.

Am optischen Element 700 werden auftreffende Strahlen umgelenkt. An den Spiegeln 730, 740 werden die beiden Auswertungsstrahlen 520 und 510 voneinander getrennt und zu den Kameras 210, 220 geleitet. Am Spiegel 730 wird der Auswertungsstrahl 520 in einen ersten Detektionsstrahl 530 reflektiert, der mittels eines Umlenkspiegels 710 zur ersten Kamera 210 gelenkt wird. Der zweite Auswertungsstrahl 510 wird am Spiegel 740 als zweiter Detektionsstrahl 540 zu einem Umlenkspiegel 710 gelenkt, sodass der zweite Detektionsstrahl 540 auf die zweite Kamera 210 auftrifft. Die mit den Kameras 210 und 220 aufgenommenen Signale werden in der Signalauswerteeinheit 9 verarbeitet, so dass das Profil der Waferoberfläche 40 des Wafers 20 erfasst wird.

Bei der hier gezeigten Ausführungsform werden die Detektionsstrahlen 530, 540 ebenfalls derart fokussiert, dass sie an einem einzelnen Punkt auf den Kameras 210, 220 auftreffen.

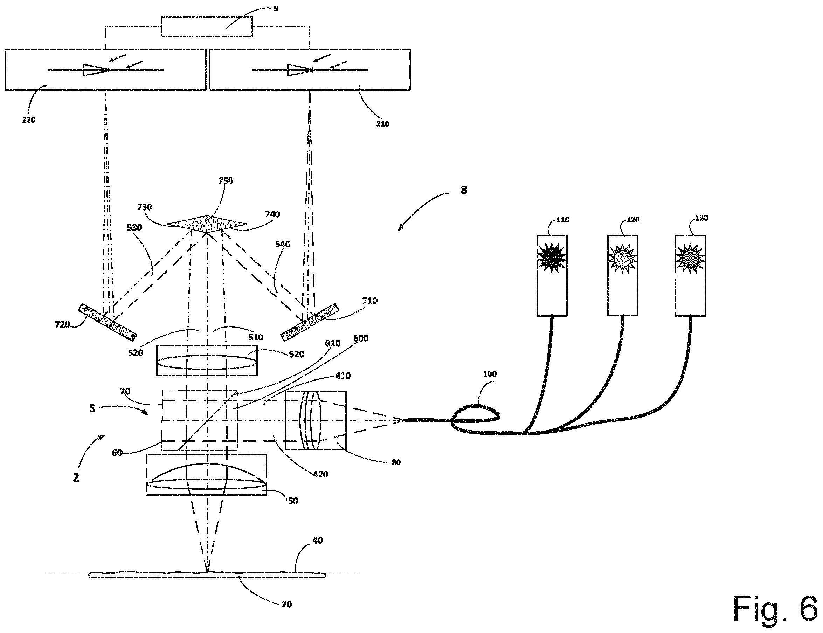

Fig. 6 zeigt eine alternative Ausführungsform des erfindungsgemäßen Systems 1, die dem Aufbau nach der Ausführungsform gemäß Fig. 5 entspricht. Die beiden Ausführungsformen der Fig. 5 und 6 unterscheiden sich lediglich durch die Verwendung des optischen Elements, das die beiden Auswertungsstrahlen 510, 520 in die Detektionsstrahlen 530, 540 umlenkt. Gemäß Fig. 6 wird ein flacheres optisches Element 750 verwendet, sodass keine rechtwinklige Strahlenführung erzielt wird, wie es in der Ausführungsform gemäß Fig. 5 vorgesehen ist. Gemäß Fig. 5 werden die Auswertungsstrahlen um 90° auf die beiden Umlenkspiegel 710, 720 gelenkt, die im 45°-Winkel angeordnet sind, sodass die Detektionsstrahlen 530, 540 nach ihrem Auftreffen im 90°-Winkel zu den beiden Kameras 210, 220 geleitet werden.

Gemäß Fig. 6 erfolgt mittels des optischen Elements 750 und den beiden Spiegeln 730, 740 eine von 90° verschiedene Umlenkung aufgrund der Anordnung der Spiegel 730, 740 an den nicht rechtwinklig angeordneten Seitenflächen des rautenförmigen optischen Elements 750. Die beiden Umlenkspiegel 710 und 720 sind entsprechend angeordnet, damit die Detektionsstrahlen auf einen Punkt auf der jeweiligen Kamera 210, 220 gelenkt, bevorzugt fokussiert werden. Hierdurch lässt sich ein deutlich kompakterer Messaufbau realisieren, sodass das System kleiner und kompakter aufgebaut und die Genauigkeit der Messungen erhöht werden kann.

Selbstverständlich kann das Prisma 600 aus den Figuren 5 und 6 bevorzugt auch in einer Ausführungsform der Erfindung gemäß Figur 1 eingesetzt werden, wobei der teildurchlässige Spiegel 90 und die Spiegel 60, 70 ersetzt werden. Auch kann die optische Vorrichtung 2 aus Figur 1 in die Ausführungen gemäß den Figuren 5, 6 verwendet werden.

Ebenso kann die Detektionseinheit gemäß Figur 1, die die Kameras 210, 220 und die Prismen 275, 270, die Tubusoptiken 200, 230 und die Spiegel 260 umfasst, durch die Detektionseinheit gemäß der Figuren 5, 6 ersetzt werden, so dass die Bündeloptik 620, das optische Element 700 oder 750, die Spiegel 710, 720, 730 und 740 sowie die Kameras 210, 220 verwendet werden. Gleiches gilt vice versa.

Signalauswertung

Die nachfolgende Erläuterung der Berechnung des Oberflächenprofiles aus den gewonnen Signalen $i_x$, $r_x$ und $q_x$ mit x = 1, 2, 3 für die drei Wellenlängen $\lambda_1$, $\lambda_2$ und $\lambda_3$ wird nur für ein Pixel der Kamerasensoren der Zeilenkameras 210 bzw. 220 ausgeführt. Es versteht sich, dass diese Berechnung für jedes Pixel der Kameras 210, 220 durchgeführt werden kann. Es ist somit möglich entsprechend der Sensorgröße und Anordnung eine Vielzahl von Höhenpunkten des Profils gleichzeitig zu ermitteln.

Für eine Zeilenkamera mit heute z. B. verfügbaren 16384 Punkten pro Zeile sind dies entsprechend 16384 Höhenwerte für jeden Auslesetakt der Kameras. Weiterhin kann man bei der hier beschriebenen Anordnung die Zeilenkameras 210, 220 kontinuierlich relativ zum Wafer 20 bewegen. Man erhält entsprechend der Taktgeschwindigkeit der Kameras entsprechend viele Zeilen mit Höheninformationen pro Zeiteinheit. Bei einem Takt der vorgeschlagenen Mehrkanal-TDI-Zeilenkameras von z.B. 100 kHz erhält man also mehr als 1600 Mio. Höhenwerte pro Sekunde. Solche Kameras werden von verschiedenen Herstellern angeboten (z.B. von Vieworks und von Dalsa Teledyne). Die Verwendung derartiger TDI-Mehrkanalzeilenkameras ist eine besonders geeignete Variante, da sich so sehr hohe Messgeschwindigkeiten erzielen lassen. Diese Kameras enthalten mehrere (in der Regel 4) TDI-Blöcke in einer Kamera, die sich simultan betreiben und auslesen lassen. Bei Einsatz solcher Kameras wird die Aufnahme der genutzten Wellenlängen, die zu einer Zeile auf der Waferoberfläche gehören, nacheinander erfolgen. D.h. während der erste TDI-Block den Zeilenbereich bei $\lambda_1$ aufnimmt, ermittelt der zweite TDI-Block das Signal bei $\lambda_2$ und der dritte TDI-Block das Signal $\lambda_3$.

Für die nachfolgend dargestellte Berechnung ist dieser zeitliche Versatz prinzipiell unerheblich. Es müssen lediglich die erhaltenen Signalbilder zeitlich gestaffelt (entsprechend dem räumlichen Versatz der TDI-Blöcke) zugeordnet und ausgewertet werden. Mit dieser Anordnung lässt sich besonders gut eine hohe Signalqualität (entsprechend hoch aufgelöste und robuste Messung) mit hoher Geschwindigkeit vereinbaren. Alternative Anordnungen werden weiter unten erläutert.

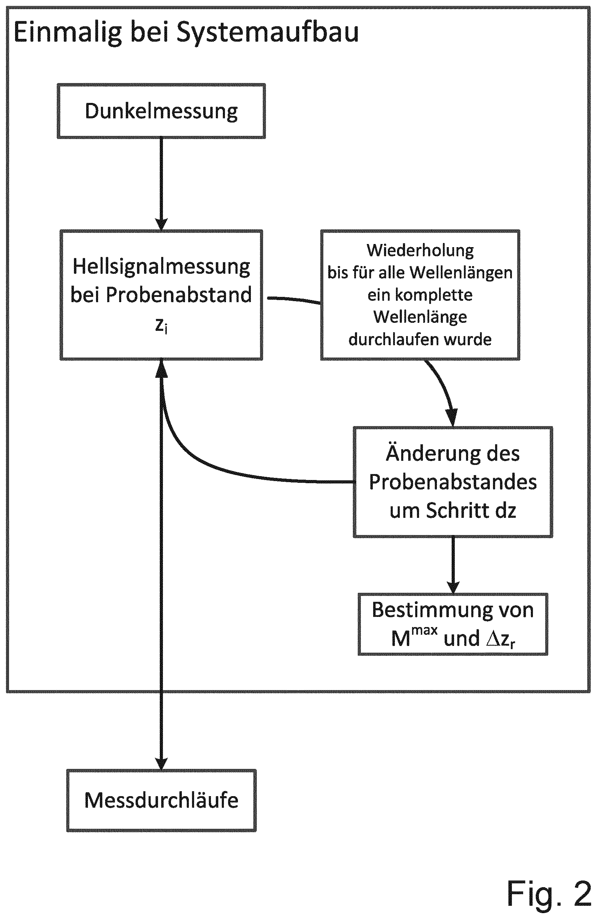

Der Ablauf der Messung und Ihrer Vorbereitung ist in Fig. 2 illustriert. Für eine korrekte Bestimmung der Höhenwerte muss die Messung mittels einer Dunkelsignalmessung und einer Bestimmung der Übertragungsfunktion der Optik und Sensorik vorbereitet werden.

In der Dunkelsignalmessung wird bei abgeschalteter Lichtquelle das Signal d an jedem Kamerapixel y der beiden Zeilenkameras 210 und 220 gemessen. Damit wird das sogenannte Dunkelrauschen der Kamera bestimmt, welches für jede weitere Messung ein Offset darstellt und vom Signal abgezogen wird. Dies wird für beide Zeilenkameras (Sensoranordnungen) 210 (Index z=1) und 220 (Index z=2) durchgeführt.

$d_{xyz}$      ausgelesener Signalwert bei Wellenlänge x ($\lambda_x$) am Pixel y des

Sensors z                                                                          (5)

Zur Bestimmung der optischen und elektrischen Transferfunktion der Anordnung (System 1) wird eine Hellsignalmessung h mit einem bekannten ebenen Objekt durchgeführt. Dazu wird die Waferoberfläche 40 durch ein ebenes Referenzstück mit bekannten Reflexionseigenschaften ersetzt. Da das Signal h an jedem Sensorpixel eindeutig durch die Intensität der Lichtquelle (Signalwert q), der Transferfunktion M, dem Reflexionsgrad des Referenzstückes r , der Wegdifferenz $l_z$ der beiden interferierenden Lichtbündel (erster Objektstrahl 450 und erster Spiegelstrahl 490) (auftreffend auf Sensor (Zeilenkamera) 220, z = 2) bzw. zweiter Spiegelstrahl 500 und zweiter Objektstrahl 460 (auftreffend auf Sensor (Zeilenkamera) 210, z = 1) und dem Dunkelsignal d bestimmt ist, lässt sich bei bekannten Werten h, q, r, und d die Transferfunktion M für jede Wellenlänge x, für jedes Pixel y und für beide Sensoren z als Funktion der Wegdifferenz ermitteln. Die Transferfunktion ist im Allgemeinen für jede Wellenlänge x, jeden Pixel y und jede Kamera z unterschiedlich. Sie wird bestimmt durch die Empfindlichkeit der einzelnen Pixel, durch die Ausleuchtung, Materialeigenschaften, die Beschichtungen und Abbildungsfehler der Optik.

Um die Ausgangsintensität jeder Laserlichtquelle 110, 120, 130 zu überprüfen und in die Rechnung als Korrektur- bzw. Referenzwert einfließen zu lassen, können die Signale $q_1$, $q_2$ und $q_3$ der üblicherweise in jedem Lasermodul eingebauten Monitordioden (auf der dem Ausgang abgewandten Seite des Lasers) 140, 150, 160 direkt benutzt werden.

Das Signal h der Hellreferenzmessung ist:

$$h_{xyz,href}\,(l_z) = q_{xy,href} * M_{xyz}(l_z) * r_{x,ref} + d_{xyz} \qquad (6)$$

Dabei sind:

$h_{xyz,\,href}\,(l_z)$ — Messwert der Referenzmessung bei Wellenlänge x am Pixel y des Sensors z (Interferometer, Zeilenkameras 210 [z = 1] und 220 [z = 2]) als Funktion der Wegdifferenz $l_z$.

$q_{xyz,\,href}$ — eingestrahlte Lichtintensität der Referenzmessung bei Wellenlänge x am Pixel y.

$M_{xyz}\,(l_z)$ — Transferfunktion bei Wellenlänge x am Pixel y des Sensors z als Funktion der Wegdifferenz $l_z$.

$r_{x,\,ref}$ — Reflexionskoeffizient der Referenzmessung (bekanntes Material) bei Wellenlänge x.

$d_{xyz}$ — ausgelesener Dunkel-Signalwert (kein Anregungslicht) bei Wellenlänge x am Pixel y des Sensors z.

Anmerkung: Die Dunkel-Signalwerte sind trotz "dunkel = ohne Licht" "wellenlängenabhängig", da für die verschiedenen Wellenlängen unterschiedliche Sensorpixel genutzt werden - diese können unterschiedliche Dunkelzählwerte haben.

Das Argument $l_z$ bezeichnet hierbei die Wegdifferenz, die die beiden interferierenden Bündel, also erster Objektstrahl 450 und erster Spiegelstrahl 490, auftreffend auf Zeilenkamera 220, z = 2 bzw. zweiter Objektstrahl 460 und zweiter Spiegelstrahl 500, auftreffend auf Zeilenkamera 210, z = 1 jeweils zueinander haben.

In Fig. 3 sind die Verhältnisse für das Lichtbündel-Paar erster Objektstrahl 450 und erster Spiegelstrahl 490 dargestellt. Wie daraus ersichtlich, ist die WegDifferenz $l_2$ gerade 2x ($z_{mirror2}$ - $z_{sample}$), da sich der Wegunterschied $z_{differenz}$ aufhebt, weil er von jedem Teilbündel (erster Messstrahl 430 und zweiter Teilstrahl 420) genau einmal durchlaufen wird. Der Abstand $z_{mirror2}$ des Referenzspiegels 60 trägt hier den Index 2, da die beiden Referenzspiegel 60, 70 ohne Beschränkung der Allgemeinheit zur Herstellung des erfindungsgemäßen Phasenversatzes einen unterschiedlichen Abstand vom Teilerspiegel 90 des Strahlteilers 4 haben.

Für das Lichtbündelpaar zweiter Objektstrahl 460 und zweiter Spiegelstrahl 500 gelten analoge Verhältnisse, wie in Fig. 4 dargestellt. Hier durchlaufen beide später interferierenden Teilbündel (erstes Teilbündel umfassend zweiten Teilstrahl 420 und zweiten Objektstrahl 460; zweites Teilbündel umfassend zweiten Referenzstrahl 480 und zweiten Spiegelstrahl 500) den Wegunterschied $z_{differenz}$ genau 2 mal, wodurch er sich wiederum aufhebt und die zu berücksichtigende Wegdifferenz $l_1$ gerade gleich 2x ($z_{mirror1}$ - $z_{sample}$) ist.

Zur Bestimmung des Abstandes der Waferoberfläche 40 von der Sensoranordnung $z_{sample}$ (diese entspricht der optischen Vorrichtung 2) können für Definition und Verwendung der Transferfunktion leicht unterschiedliche Verfahren genutzt werden. Das ausgewählte Verfahren wird für beide Sensoren Zeilenkameras 210 und 220 gleichermaßen eingesetzt.

Zum einen kann die Transferfunktion M(I) in einen nicht-interferierten Faktor $M^{max}$ und die Interferenzwirkung zerlegt werden. Den Faktor $M^{max}$ erhält man, indem die Transferfunktion M(I) nur in Ihren Maxima bestimmt wird. Die Intensitätsmodulation durch die Interferenz lässt sich dann direkt aus den Werten des Messdurchlaufs ermitteln. Dieser erste Weg ist nachfolgend weiter beschrieben.

Zum anderen kann die Intensitätsmodulation durch die Interferenz in die Transferfunktion M(I) einbezogen werden. Dann wird M(I) in der Referenzmessung für den gesamten Arbeitsbereich als Funktion der Wegdifferenz der beiden Bündel (erster und zweiter Teilstrahl) und der Abstand zu der Waferoberfläche ermittelt. Die Abstandsdifferenz zur Waferoberfläche wird im Messdurchlauf durch den Vergleich der Transferfunktionswerte mit denen der als Referenz durchgeführten Hellsignalmessung ermittelt. Dieser Vergleich erfolgt jeweils für das Triplet der Wellenlängen x = 1,2,3 und für beide Sensoren z=1,2 und sucht den zu allen drei Wellenlängen und beiden Sensoren passenden Abstand.

Für die Sensoren Zeilenkameras 210 und 220 gelten die Transferfunktionen (wobei sich die /2 im Nenner aus dem 2x Durchlauf durch die Differenz $z_{mirror}$-$z_{sample}$ ergibt):

$$M_{xyz}(l_z) = M_{xyz}^{max} * \left( 1 + cos\left[ \frac{2\pi}{\lambda_x/2} * (z_{mirror,z} - z_{sample}) \right] \right) \qquad (7)$$

Dabei sind:

$M_{xyz}\,(l_z)$ — Transferfunktion bei Wellenlänge x am Pixel y des Sensors z als Funktion der Wegdifferenz $l_z$.

$M_{xyz}^{max}$ — maximaler Wert der Transferfunktion bei Wellenlänge x am Pixel y des Sensors z → kontruktive Interferenz = Wegdifferenz $l_z$. = ganzzahliges Vielfaches der Wellenlänge $\lambda_x$

$z_{mirror,\,z}$ — Abstand des Teilerspiegels 90 vom Spiegel 60 bzw. 70 (vgl. Fig. 4)

$z_{sample}$ — Abstand des Teilerspielgels 90 von der Waferoberfläche 40 (vgl. Fig. 4)

Bestimmt man hierfür für jede der drei Wellenlängen x = 1,2,3 die maximalen Signalwerte, so lässt sich $M^{max}$ für jede Wellenlänge ermitteln:

$$M_{xyz}^{max} = \frac{h_{xyz,href}(l_{z\,für\,h_{max}\,(x)}) - d_{xyz}}{q_{xy,href} * r_{x,ref}} \qquad (8)$$

Dabei ist:

$l_{z\,für\,h_{max}\,(x)}$       Wegdifferenz, bei der das Signal am Sensor z maximal ist, also $l_z$ ein ganzzahliges Vielfaches der Wellenlänge $\lambda_x$ ist.

Die Bestimmung von $M^{max}$ erfolgt für jede Wellenlänge z.B. indem man den Abstand $z_{sample}$ des Referenzstückes kontinuierlich verändert, und so für alle drei Wellenlängen x = 1, 2, 3 und beide Sensoren z = 1, 2 eine volle Wellenlängen-Periode durchläuft. Dabei lässt sich auch aus den jeweiligen $z_{sample,y}$ Positionen, bei denen der Maximalwert auftritt ermittelten, wie groß der Phasenversatz $\Delta z_r = z_{mirror1,y} - z_{mirror2,y}$ der beiden Spiegel 60 und 70 an jedem Pixel y ist.

Im Messdurchlauf mit der zu untersuchenden unbekannten Waferoberfläche 40 werden nunmehr gleichzeitig die Sensorsignale $i_{z1}$, $i_{z2}$ und $i_{z3}$ der Kamerasensoren 210 [z=1] und 220 [z=2] aufgenommen sowie die Ausgangsintensitäten der Laser-Lichtquellen 110, 120, 130 mittels der eingebauten Monitordioden 140, 150, 160.

Für die Signale an den Sensoren, Zeilenkameras 210 und 220, gilt:

$$i_{xyz} = q_{xy} * M_{xyz}(l_z) * r_{xy,wafer} + d_{xyz} \qquad (9)$$

$$i_{xyz} = q_{xy} * M_{xyz}^{max} * \left(1 + cos\left[\frac{2\pi}{\lambda_x/2} * (z_{mirrorz,y} - z_{sample,y})\right]\right) *$$

$$r_{xy,wafer} + d_{xyz} \qquad (10)$$

Dabei sind:
$i_{xyz}$       Interferometrie-Messwert bei Wellenlänge x am Pixel y des Sensors z
$q_{xy}$       eingestrahlte Lichtintensität der Messung bei Wellenlänge x am Pixel y
$M_{xyz}^{max}$       maximaler Wert der Transferfunktion bei Wellenlänge x am Pixel y des Sensors z $\rightarrow$ kontruktive Interferenz = Wegdifferenz $l_z$. = ganzzahliges Vielfaches der Wellenlänge $\lambda_x$
$r_{xy,\,wafer}$       Reflexionskoeffizient des Wafers 20 bei Wellenlänge x am Pixel y
$d_{xyz}$       ausgelesener Dunkel-Signalwert (kein Anregungslicht) bei Wellenlänge x am Pixel y des Sensors z

Mit der Relation $\Delta z_{ry} = z_{mirror1,y} - z_{mirror2,y}$ und der Umformung $\Delta z_y = z_{mirror1,y} - z_{sample,y}$ lassen sich die Gleichungen für die beiden Sensoren vereinfachen zu:

$$i_{xy1} = q_{xy} * M_{xy1}^{max} * \left(1 + cos\left[\frac{2\pi}{\lambda_x/2} * \Delta z_y\right]\right) * r_{xy,wafer} + d_{xy1} \qquad (11)$$

und

$$i_{xy2} = q_{xy} * M_{xy2}^{max} * \left(1 + cos\left[\frac{2\pi}{\lambda_x/2} * (\Delta z_y - \Delta z_{ry})\right]\right) * r_{xy,wafer} + d_{xy2}$$

$$(12)$$

Da für die Profilmessung der Waferoberfläche 40, also die Erfassung des Oberflächenprofils des Wafers, die Bestimmung von $\Delta z_y$ ausreichend ist und die Abstandsdifferenzen $\Delta z_{ry}$ aus der Vormessung zur Ermittlung der Maxima der Transferfunktionen $M^{max}$ bekannt ist, definiert dieses Paar Signalgleichungen (11), (12) für jeden Pixel y ein Gleichungssystem aus 6 Gleichungen (für die Argumente gilt x = 1, 2, 3 und z = 1, 2) für die 4 unbekannten Größen:

-   die drei Reflexionskoeffizienten $r_{xy,wafer}$ der Waferoberfläche 40

-   die gesuchte Abstandsdifferenz $\Delta z_y$, die das Profil der Waferoberfläche 40 ergibt

Durch geeignete Wahl der Wellenlängen $\lambda_1$, $\lambda_2$ und $\lambda_3$ für x = 1, 2, 3 lässt sich ohne Schwierigkeiten ein Arbeitsbereich von 0,5 mm mit eindeutiger Zuordnung der beiden Intensitätsmesswerttripel $i_{xy1}$ und $i_{xy2}$ zu einer

Wegdifferenz $\Delta z_y$ herstellen, was für eine Vielzahl von Profilmessaufgaben ausreichend ist. Dies ist in eingangs genannter Veröffentlichung von K.Meiners-Hagen, R. Schrödel, F. Pollinger und A. Abou-Zeid erläutert. In der darin bekannt gemachten Anordnung werden beispielsweise die Wellenlängen 532 nm, 632 nm und 780 nm verwendet und es wird ein Arbeitsbereich von 0,6 mm mit eindeutiger Zuordnung der Abstandsdifferenz erreicht.

Zur Vereinfachung der mathematischen Auswertung können die Gleichungen zusammengefasst werden:

$$\frac{i_{xy1}-d_{xy1}}{i_{xy2}-d_{xy2}} = \frac{M_{xy1}^{max}}{M_{xy2}^{max}} * \frac{1+cos\left[\frac{2\pi}{\lambda_x/2}*\Delta z_y\right]}{1+cos\left[\frac{2\pi}{\lambda_x/2}*(\Delta z_y-\Delta z_{ry})\right]} \tag{13}$$

und mit:

$$P_y = \frac{i_{xy1}-d_{xy1}}{i_{xy2}-d_{xy2}} * \frac{M_{xy2}^{max}}{M_{xy1}^{max}} \tag{14}$$

zu:

$$P_y * \left(1 + cos\left[\frac{2\pi}{\lambda_x/2} * \left(\Delta z_y - \Delta z_{ry}\right)\right]\right) = 1 + cos\left[\frac{2\pi}{\lambda_x/2} * \Delta z_y\right] \tag{15}$$

Damit reduziert sich die Aufgabe für jedes Pixel y auf die Bestimmung von $\Delta z_y$ aus den verbleibenden 3 Gleichungen, welche jeweils gleichzeitig erfüllt sein müssen. Durch die Zusammenfassung gehen in die Berechnung die Intensitäten $q_{1y}$, $q_{2y}$ und $q_{3y}$ der Laserquellen nicht mehr unmittelbar ein und die Reflexionskoeffizienten $r_{xy,wafer}$ der Waferoberfläche 40 müssen nicht explizit bestimmt werden.

Stellt man $\Delta z_y$ in Einheiten der halben Wellenlänge dar, so kann $\Delta z_y$ für jede der drei Wellenlängen $\lambda_x$ als Summe aus ganzzahligen Anteilen $\delta_x$ und dem Rest $f_x$ dargestellt werden als:

$$\Delta z_{yx} = \frac{\lambda_x}{2} * (\delta_x + f_x) \tag{16}$$

Die gesuchte Wegdifferenz $\Delta z_y$ ermittelt man aus den $\Delta z_{yx}$, indem man das Triple $\delta_x$ ganzzahliger Anteile ermittelt, für welches die mittlere Abweichung der zugehörigen $\Delta z_{yx}$ vom jeweiligen Mittelwert minimal ist.

Nutzung eines Referenzprofiles für die Höhenmessung von wiederkehrenden Strukturen

Eine wichtige Anwendung der hier dargestellten Höhenprofilmessung ist die Vermessung der Höhen der Kontaktstrukturen auf Wafern. Hierbei ist lediglich die Höhe der Struktur von Interesse, um beim späteren Einbringen und Kontaktieren der Chips im Gehäuse oder bei der 3-dimensionalen Integration von mehreren Chips sicher zu gehen, dass alle Kontaktstrukturen tatsächlich elektrischen Kontakt haben und keine der Strukturen so groß ist, dass der Chip beim Einbau mechanisch beschädigt wird. Dafür soll jeweils ermittelt werden, ob die Zenitpunkte aller Kontaktstrukturen mit hinreichend geringer Toleranz in einer Ebene liegen.

Um diese Aufgabe schnell und zuverlässig zu lösen, wird vorgeschlagen, eine hochauflösende Referenzmessung an einigen wenigen Exemplaren der Kontaktstrukturen auszuführen, daraus ein Referenzmodell der Kontaktstruktur zu erstellen und zur routinemäßigen Messung gleichartiger Wafer nur so viele Messpunkte aufzunehmen, das mit Sicherheit einige davon auf der Kontaktstrukturoberseite liegen.

Ein solches Referenzmodell kann mit demselben, oben beschriebenen Profilmessverfahren erstellt werden. Dazu kann in einer ersten Ausführungsform der Erfindung das Objektiv 50 als Wechselobjektiv mit verschiedenen Vergrößerungen ausgeführt sein. Die Referenzmessung kann dann mit einer hohen Vergrößerung ausgeführt werden. Das Referenzmodell kann z.B. durch Mittelung oder Medianberechnung aus mehreren vermessenen Kontakten erzeugt werden.

Die Routinemessung kann mit einer niedrigeren Vergrößerung ausgeführt werden, so dass gerade noch genug Messpunkte auf der Kontaktoberfläche ermittelt werden, um einen zuverlässigen Vergleich mit dem Referenzmodell durchführen zu können.

In einem anderen, alternativen Verfahren kann Objektiv 50 ein festes Objektiv mit einer festen Vergrößerung sein. Die Referenzmessung kann hierbei durch mehrfache Messung mit kleinem lateralem Versatz ausgeführt werden. Dadurch wird wiederum eine dichtere Messpunktabdeckung für den vermessenen Kontakt gewonnen. Das Referenzmodell kann wieder durch Mittelung oder Medianberechnung aus mehreren vermessenen Kontakten erzeugt werden.

Der Vergleich mit einem Referenzmodell hat zur Ermittlung der Zenitpunkte den Vorteil, dass man die Messpunktdichte geringer wählen kann. Man ist nicht darauf angewiesen, den Zenitpunkt selbst immer als Messpunkt treffen zu müssen. Vielmehr genügt es, einige wenige Punkte, z.B. 5 bis 10 Punkte auf der Kontaktoberfläche zu benutzen. Diese können an beliebigen Stellen auf dem Kontakt liegen. Die Zenithöhe wird dann durch Anpassung der Modellhöhe an die gemessenen Punkte bestimmt. Dadurch kann insgesamt mit einer geringeren Messpunktdichte und somit mit einem höheren Durchsatz gearbeitet werden und trotzdem eine zuverlässige Messung der Zenithöhen der Kontakte erfolgen.

Nutzung zur Inspektion

Nach Bestimmung des Höhenprofiles der Oberfläche sind die Werte $\Delta z_y$ bekannt. Damit können aus den Intensitätsdaten $i_{xy1}$ eines der Kanäle die Werte für die Reflexionskoeffizienten $r_{xywafer}$ nach Gleichung (11) ermittelt werden:

$$r_{xy,wafer} = \frac{i_{xy1} - d_{xy1}}{q_{xy*} M_{xy1}^{max} * \left(1 + cos\left[\frac{2\pi}{\lambda_x/2} * \Delta z_y\right]\right)} \qquad (17)$$

Daraus kann für jede Wellenlänge $\lambda_x$ ein monochromatisches Bild bei der jeweiligen Wellenlänge durch Zusammenführen der so berechneten Pixel-Werte für alle y-Orte erstellt werden.

Zur Verbesserung der Bildqualität können auch die Intensitätswerte beider Kanäle (z = 1, 2) nach Gl. (18) genutzt und ein gemitteltes Bild erstellt werden.

$$r_{xy,wafer} = \frac{1}{2*q_{xy}} * \left( \frac{i_{xy1} - d_{xy1}}{M_{xy1}^{max} * \left(1 + cos\left[\frac{2\pi}{\lambda_x/2} * \Delta z_y\right]\right)} + \frac{i_{xy2} - d_{xy2}}{M_{xy2}^{max} * \left(1 + cos\left[\frac{2\pi}{\lambda_x/2} * (\Delta z_y - \Delta z_{ry})\right]\right)} \right)$$

$$(18)$$

Diese Bilder können für weitere Aufgaben, wie z.B. die Suche nach Defekten oder die Prüfung der lateralen Ausrichtung der Daten-Aufnahmen benutzt werden.

Ausführungsvarianten

Alternative Ausführungsvarianten sollen ohne Beschränkung der Allgemeinheit Bestandteil der Erfindung sein.

So dient der Einsatz der TDI-Technik in der erläuterten Erfindung lediglich der Verbesserung des Signal-Rauschverhältnisses und ist für das erfindungsgemäße Prinzip nicht notwendig. Für einfachere Anforderungen kann daher anstelle von TDI-Mehrkanal-Kamerazeilensensoren (Zeilenkameras 210 und 220) auch eine Anordnung aus jeweils drei unabhängigen Zeilensensorkameras oder von drei unabhängigen, einkanaligen TDI-Zeilensensorkameras gewählt werden. Die für diese Ausführung erforderliche weitere räumliche Aufspaltung lässt sich durch Vergrößerung des jeweiligen Abstandes zwischen den Prismen 250 bzw. 270 und den Tubusoptiken 230 resp. 200 erreichen. Die Tubusoptiken 230 resp. 200 können dazu auch als 3 einzelne Optiken ausgebildet werden.

Alternativ können auch übliche Flächenkameras eingesetzt werden oder TDI-Einkanalzeilenkameras, die im Flächenauslesungsmodus betrieben werden. Bei einer solchen Anordnung verringert sich die Taktfrequenz entsprechend auf z.B. einen Takt von 1 kHz (für den beschriebenen Flächenauslesungsmodus einer TDI- Einkanalzeilenkamera) und man erhält immer noch mehr als 16 Mio. Höhenwerte pro Sekunde.

Es versteht sich, dass bei Nutzung von Flächenkameras oder TDI-Einkanalzeilenkameras im Flächenauslesungsmodus die drei Wellenlängen $\lambda_1$, $\lambda_2$ und $\lambda_3$ auf den Kamerasensoren auf unterschiedliche Zeilen x = 1, 2, 3 abgebildet werden. Die Zuordnung der erhaltenen Signalbilder zueinander, die bei den drei Wellenlängen jeweils den gleichen Punkt auf der Waferoberfläche 40 betrachten, erfolgt hier durch eine räumliche Zuordnung der Bereiche des Kamerasensors. Für die prinzipielle oben dargestellte Auswertung ist es unerheblich, ob die Zuordnung räumlich (bei flächigen Sensoren) oder zeitlich gestaffelt (bei Zeilensensoren) erfolgt.

Es ist zu beachten, dass für lateral hochauflösende Anwendungen (z.B. im einstelligen $\mu$m-Bereich) durch den Einsatz mehrerer Kameras ohnehin eine laterale und rotatorische Korrektur für die aufgenommenen Signalbilder erforderlich ist, da eine Justage der gesamten Anordnung auf einen Versatz der Kameravon weniger als 1 $\mu$m mechanisch kaum erreichbar ist. Eine solche mathematische Korrektur kann üblicherweise durch die Aufnahme eines Referenzmusters ermöglicht werden, aus dem der genaue Ort auf dem Wafer, der von jedem Pixel betrachtet wird ermittelt werden kann.

In weiteren Ausführungsvarianten kann die Zahl der eingesetzten Wellenlängen dem benötigten Arbeitsbereich angepasst werden. Für besonders kleine Arbeitsbereiche ist bereits eine Ausführung mit nur einer Wellenlänge möglich oder für kleine Bereiche mit zwei Wellenlängen. Bei nur einer Wellenlänge dient die erfindungsgemäße Nutzung der dargestellten zwei "Sensorarme" der Ermittlung des Reflexionsgrades der Probe und ermöglicht somit - im Unterschied zu herkömmlichen Multi-Wellenlängen-Interferometrieanordnungen - die Messung von Profilen mit wechselnden oder unbekannten Materialien. Für noch größere Arbeitsbereiche oder eine Verbesserung der Zuverlässigkeit durch Redundanz der Messung bietet sich die Ausdehnung auf mehr als 3 Wellenlängen an, die insbesondere mit der oben genannten Multi-Block-TDI-Kamera realisiert werden kann (es wurden bereits Kameras mit 7 TDI-Blöcken vorgestellt).

In weiteren Ausführungsvarianten kann die hier vorgestellte Kombination von 2 Interferometrie-Sensoren (Zeilenkameras 210, 220) auch in eine Ausführung von zwei nacheinander erfolgenden Messungen aufgeteilt bzw. in zwei nacheinander einzusetzenden Messköpfen realisiert werden.

Die Beleuchtung kann geeignet mit kontinuierlich strahlenden, monochromatischen Lichtquellen erfolgen. Laser sind dafür ebenso geeignet wie andere breitbandigere Strahlquellen, welche mit entsprechenden Interferenzfiltern kombiniert sein können. Einzige Bedingung ist, dass die Kohärenzlänge des eingesetzten Lichtes für den zu realisierenden Arbeitsbereich ausreichend groß ist.

Für das erfindungsgemäße Verfahren ist ausreichend, dass ein Phasenversatz zwischen den zwei Strahlenbündeln, also zwischen dem ersten Spiegelstrahl 490 und dem zweiten Spiegelstrahl 500 des "Referenzarmes" erzeugt wird, der für alle eingesetzten Wellenlängen verschieden von einem ganzzahligen Vielfachen der Wellenlänge ist. Dies kann wie im Ausführungsbeispiel dargestellt durch einen räumlichen Versatz der Spiegel 60 und 70 erfolgen. Es kann jedoch auch ein Spiegel mit einer oder zwei unterschiedlichen Beschichtungen versehen werden, um den Phasenversatz zu erzeugen. Z.B. entsteht an einer aufgebrachten transparenten Schicht durch Interferenz der an Vorder- und Rückseite der Schicht reflektierten Strahlen ein Phasenversatz.

Ebenso kann anstelle des Strahlteilers 90 ein geklebtes Prisma mit quadratischem Querschnitt genutzt werden, welches in der geklebten 45°-Fläche mit einer teilverspiegelnden Schicht versehen ist. Somit wird ein teildurchlässiger Spiegel gebildet. Bei Verwendung eines solchen Prismas kann der "Referenzarm" durch Aufdampfen einer Verspiegelung direkt auf die Außenfläche des Prismas erzeugt werden. Durch Aufbringen zweier unterschiedlicher Schichtdicken oder unterschiedlicher Materialien kann wieder der erforderliche Phasenversatz erzeugt werden. Diese Anordnung führt zwar wegen der deutlich unterschiedlichen Dispersion im "Referenz- und Messarm" des Interferometers zu einer Verringerung des Interferenzkontrastes; ist aber jedenfalls für einfache Anforderung aufgrund seiner Robustheit vorteilhaft. Eine Ausführungsform mit einem geklebten Prisma ist in den Figuren 5 und 6 gezeigt.

## Patentansprüche

1.  Optische Vorrichtung zum Erfassen eines Oberflächenprofils einer Objektoberfläche (30) eines Objekts mittels interferometrischer Abstandsmessung, umfassend

    einen Strahlaufspalter (3) zum Aufspalten eines Lichtstrahls (84) einer Lichtquelle (7) in einen ersten Teilstrahl (410) und einen zweiten Teilstrahl (420), wobei der Lichstrahl aus einer oder mehrerer monochromatischer Licht-Anteile besteht;
    einen Strahlteiler (4) zum Aufteilen jedes Teilstrahls (410, 420) der Lichtquelle (7) in einen Referenzstrahl (470, 480) und einen Messstrahl (430, 440);
    einen Spiegel (5) zur Reflexion der beiden Referenzstrahlen (470, 480), der derart ausgebildet ist, um einen Phasenunterschied zwischen den reflektierten Strahlen (490, 500) zu erzeugen;
    eine Detektoreinheit (8) zum Detektieren von Auswertungsstrahlen (520, 510); und
    eine Signalauswerteeinheit (9) zum Auswerten der detektierten Auswertungsstrahlen (520, 510) und Ermitteln des Oberflächenprofils;
    wobei
    jeder Messstrahl (430, 440) zur Reflexion auf einen Messbereich auf der Objektoberfläche (30) geleitet wird und nach Reflexion als Objektstrahl (450, 460) zu dem Strahlteiler (4) geleitet wird;
    jeder Referenzstrahl (470, 480) an dem Spiegel reflektiert und als Spiegelstrahl (490, 500) zu dem Strahlteiler (4) geleitet wird;
    der Objektstrahl (450, 460) und der Spiegelstrahl (490, 500) nach Auftreffen auf den Strahlteiler (4) jeweils interferieren und als Auswertungsstrahl (520, 510) je einer Detektoreinheit (8) zum Auswerten zugeführt werden;
    die Signalauswerteeinheit (9) ausgebildet ist, um die Intensitäten der beiden Auswertungsstrahlen (520, 510) zu ermitteln;
    und
    die Signalauswerteeinheit (9) ausgebildet ist, um durch Nutzung der Intensitäten der beiden Auswertestrahlen (520, 510) ein Höhenprofil der Oberfläche (30) zu ermitteln, für welches der Einfluss des Reflexionsgrades der Oberfläche (30) auf die gemessenen Intensitäten rechnerisch kompensiert wird, und um dadurch für Objektoberflächen (30) mit nicht 100% Reflexion sowie für Objektoberflächen (30) mit unterschiedlichen Reflexionskoeffizienten innerhalb eines zu vermessenden Bereichs ein korrektes Profil zu ermitteln,

**dadurch gekennzeichnet, dass**

die Signalauswerteeinheit ferner so ausgebildet ist, ein monochromatisches Inspektionsbild für jede Wellenlänge aus den ermittelten Reflexionskoeffizienten der Objektoberfläche (30) zu erstellen, und die Reflexionskoeffizienten aus dem zuvor ermittelten Höhenprofil und der gemessenen Signalintensität mindestens einer der Strahlen (510 und 520) zu berechnen, sodass lediglich eine Messung der Intensitäten der beiden Auswertestrahlen (520, 510) für die Höhenprofilermittlung des betrachteten Messgebietes und die Eliminierung des Einflusses des Reflexionsgrades ausreichend ist.

2. Vorrichtung nach Anspruch 1, **dadurch gekennzeichnet, dass** die Signalauswerteeinheit (9) ausgebildet ist, um den Phasenunterschied der beiden Auswertungsstrahlen (520, 510) zu ermitteln und um aus den Intensitäten und dem Phasenunterschied der beiden Auswertestrahlen (520, 510) das Höhenprofil der Oberfläche (30) zu ermitteln.

3. System zum Erfassen des Oberflächenprofils einer Objektoberfläche (30) eines Objekts mittels interferometrischer Abstandsmessung, umfassend

   - eine Lichtquelle (7) zur Erzeugung eines monochromatischen Lichtstrahls (84); und
   - die optische Vorrichtung (2) nach Anspruch 1 oder 2.

4. Vorrichtung oder System nach einem der vorhergehenden Ansprüche, **dadurch gekennzeichnet, dass** der Spiegel (5) zwei parallele Spiegelsegmente (60, 70) aufweist, deren Spiegeloberfläche in Richtung der Normalen versetzt sind.

5. Vorrichtung oder System nach einem der vorhergehenden Ansprüche, **dadurch gekennzeichnet, dass** der Strahlteiler (4) und der Spiegel (5) in einem optischen Element, bevorzugt einem Prisma (600), integriert sind.

6. Vorrichtung oder System nach dem vorhergehenden Anspruch, **dadurch gekennzeichnet, dass** das optische Element, bevorzugt das Prisma (600), aus zwei aneinander anliegenden Glasblöcken gebildet ist und an einer Seite eines Glasblocks zwei Spiegelflächen oder Spiegel (60, 70) aufgebracht sind, bevorzugt aufgedampft sind.

7. Vorrichtung oder System nach einem der vorhergehenden Ansprüche, **dadurch gekennzeichnet, dass** der Strahlteiler (4) einen halbdurchlässigen Spiegel (90) umfasst, der einen Teil eines auftreffenden Lichtstrahls (84, 410, 420) als Referenzstrahl (470, 480) passieren lässt und einen anderen Teil eines auftreffenden Lichtstrahls als Messstrahl (430, 440) in Richtung Objektoberfläche reflektiert.

8. System nach einem der vorhergehenden Ansprüche, **dadurch gekennzeichnet, dass** die Lichtquelle (7) ein Laser ist.

9. System nach einem der vorhergehenden Ansprüche, **dadurch gekennzeichnet, dass** mehrere Lichtquellen (7) zur Erzeugung eines monochromatischen Lichtstrahls (84) vorgesehen sind, deren Lichtstrahlen (84) unterschiedliche Wellenlängen aufweisen und bevorzugt keine Wellenlänge eines Lichtstrahls (84) ein ganzzahliges Vielfaches der Wellenlänge eines anderen Lichtstrahls (84) ist und deren Lichtstrahlen (84) bevorzugt in einem Strahlkoppler gebündelt werden.

10. Vorrichtung oder System nach einem der vorhergehenden Ansprüche, **dadurch gekennzeichnet, dass** die Detektoreinheit (8) eine Time-Delayed-Integration-Kamera umfasst, bevorzugt eine Farb-Time-Delayed-Integration-Kamera, besonders bevorzugt eine Time-Delayed-Integration-Mehrkanal-Zeilenkamera.

11. Vorrichtung oder System nach Anspruch 9, **dadurch gekennzeichnet, dass** ein optisches Element zum Auftrennen der gebündelten Lichtstrahlen umfasst, das derart angeordnet ist, dass die Auftrennung der Lichtstrahlen vor deren Auftreffen auf die Detektoreinheit (8) erfolgt.

12. Vorrichtung oder System nach einem der vorhergehenden Ansprüche, **dadurch gekennzeichnet, dass** ein Objektiv (50) zwischen der optischen Vorrichtung (2) und der Objektoberfläche (30) des Objekts angeordnet ist, um die Messstrahlen (430, 440) auf einen Messbereich auf der Objektoberfläche (30) zu lenken.

**13.** Vorrichtung oder System nach dem vorhergehenden Anspruch, **dadurch gekennzeichnet, dass** das Objektiv (50) ein Wechselobjektiv mit unterschiedlichen Vergrößerungen oder ein Festobjektiv ist.

**14.** System nach einem der vorhergehenden Ansprüche, mit einer Antriebseinheit zum Erzeugen einer Relativbewegung zwischen der optischen Vorrichtung (2) und dem Objekt.

**15.** Verfahren zum Erfassen des Oberflächenprofils einer Objektoberfläche (30) eines Objekts mittels interferometrischer Abstandsmessung umfassend die folgenden Schritte:

Aussenden eines Lichtstrahls (84) bestehend aus einer oder mehrerer monochromatischer Licht-Anteile in Richtung einer optischen Vorrichtung (2) mittels einer Lichtquelle (7);
Aufspalten des Lichtstrahls (84) der Lichtquelle (7) in einen ersten Teilstrahl (410) und einen zweiten Teilstrahl (420) mittels eines Strahlaufspalters (3);
Aufteilen jedes Teilstrahls (410, 420) der Lichtquelle (7) in einen Referenzstrahl (470, 480) und einen Messstrahl (430, 440) mittels eines Strahlteilers (4);
Leiten der Referenzstrahlen (470, 480) zu einem Spiegel (5);
Reflektieren der Referenzstrahlen (470, 480) an dem Spiegel (5) und Bilden von Spiegelstrahlen (490, 500), welche einen Phasenversatz aufweisen;
Leiten der Spiegelstrahlen (490, 500) zu dem Strahlteiler (4);
Reflektieren der Spiegelstrahlen (490, 500) an dem Strahlteiler (4);
Leiten der Messstrahlen (430, 440) auf einen Messbereich auf der Objektoberfläche (30);
Reflektieren der Messstrahlen (430, 440) an der Objektoberfläche (30) und Bilden von Objektstrahlen (450, 460);
Leiten der Objektstrahlen (450, 460) zu dem Strahlteiler (4);
Interferieren der Spiegelstrahlen (490, 500) mit den Objektstrahlen (450, 460) und Bilden von Auswertungsstrahlen (510, 520), wobei die Auswertungsstrahlen (510, 520) einen Phasenunterschied aufweisen;
Detektieren der Auswertungsstrahlen (510, 520) mittels einer Detektoreinheit (8);
Auswerten der detektierten Auswertungsstrahlen (510, 520) und
Ermitteln des Oberflächenprofils der Objektoberfläche (30) mittels einer Signalauswerteeinheit (9);
Nutzen der zwei gemessenen Intensitätswerte der Auswertestrahlen (510, 520), welche beide vom selben Ort auf der Objektoberfläche (30) reflektiert wurden, um den Einfluss des Reflexionsgrades der Lichtstrahlen an der Objektoberfläche (30) beim Ermitteln des Oberflächenprofils zu kompensieren und dadurch für Objektoberflächen (30) mit nicht 100% Reflexion sowie für Objektoberflächen mit unterschiedlichen Reflexionskoeffizienten innerhalb eines zu vermessenden Bereichs ein korrektes Profil zu ermitteln; **dadurch gekennzeichnet, dass** das Verfahren weiterhin die folgenden Schritte umfasst:
Erstellen ein monochromatisches Inspektionsbild für jede Wellenlänge aus den ermittelten Reflexionskoeffizienten der Objektoberfläche (30), wobei die Reflexionskoeffizienten aus dem zuvor ermittelten Höhenprofil und der gemessenen Signalintensität mindestens einer der Strahlen (510 und 520) berechnet werden, sodass das korrekte Profil aus nur einer Messung der beiden Auswertestrahlen (510, 520) und ohne Änderung des Abstands ermittelt wird.

**16.** Verfahren nach Anspruch 15, **gekennzeichnet durch** folgende Schritte:
Auswerten der detektierten Auswertungsstrahlen (510, 520) und Ermitteln des Phasenunterschieds; und Kompensieren des Einflusses des Reflexionsgrades der Lichtstrahlen an der Objektoberfläche (30) mittels des ermittelten Phasenunterschieds beim Ermitteln des Oberflächenprofils

**17.** Verfahren nach Anspruch 15 oder 16, **dadurch gekennzeichnet, dass** die Signalintensitäten beider Strahlen (510 und 520) genutzt werden.

**18.** Verfahren zur optischen Inspektion einer Objektoberfläche (30) auf Fehler, wobei eine Fehlerauswertung auf einem mittels des Verfahrens nach Anspruch 17 ermittelten Inspektionsbild basiert und auf einer anschließenden Rückrechnung auf die Reflektion des Lichtes an der Objektoberfläche (30), wobei bevorzugt die Reflexion $r_{xy}$ gewonnen wird durch:

$$r_{xy} = \frac{i_{xy} - d_{xy}}{q_{xy} * M_{xy}^{max} * \left(1 + cos\left[\frac{2\pi}{\lambda_x/2} * \Delta z_y\right]\right)},$$

mit $i_{xy}$ = Messwert bei Wellenlänge x an einem Pixel y eines Sensors;

$d_{xy}$ = Dunkel-Signalwert (ohne Anregungslicht);

$q_{xy}$ = eingestrahlte Lichtintensität der Messung;

$M_{xyz}^{max}$ = maximaler Wert der Transferfunktion bei Wellenlänge x am Pixel y des Sensors; und

$\Delta z_y = z_{mirror,z} - z_{sample}$, mit $z_{mirror,z}$ = Abstand Strahlteiler (4) zu Referenzspiegel und $z_{sample}$ = Abstand Strahlteiler (4) zu Objektoberfläche.

## Claims

1. Optical device for detecting a surface profile of an object surface (30) of an object by means of interferometric distance measurement, comprising a beam splitter (3) for splitting a light beam (84) of a light source (7) into a first partial beam (410) and a second partial beam (420), wherein the light beam consists of one or several monochromatic light components;

   a beam splitter (4) for splitting each partial beam (410, 420) of the light source (7) into a reference beam (470, 480) and a measuring beam (430, 440);
   a mirror (5) for reflecting the two reference beams (470, 480), which is designed to generate a phase difference between the reflected beams (490, 500);
   a detector unit (8) for detecting evaluation beams (520, 510); and
   a signal evaluation unit (9) for evaluating the detected evaluation beams (520, 510) and determining the surface profile;
   wherein
   each measuring beam (430, 440) is directed for reflection onto a measuring area on the object surface (30) and, after reflection, is directed to the beam splitter (4) as an object beam (450, 460);
   each reference beam (470, 480) is reflected at the mirror and directed to the beam splitter (4) as a mirror beam (490, 500);
   the object beam (450, 460) and the mirror beam (490, 500) each interfere after impinging on the beam splitter (4) and are each fed as an evaluation beam (520, 510) to a detector unit (8) for evaluation;
   the signal evaluation unit (9) is designed to determine the intensities of the two evaluation beams (520, 510); and
   the signal evaluation unit (9) is designed to use the intensities of the two evaluation beams (520, 510) to determine a height profile of the surface (30), for which height profile the influence of the degree of reflection of the surface (30) on the measured intensities is computationally compensated, and in order to thereby determine a correct profile for object surfaces (30) with non-100% reflection and for object surfaces (30) with different reflection coefficients within an area to be measured,
   **characterized in that**
   the signal evaluation unit is further designed to generate a monochromatic inspection image for each wavelength from the determined reflection coefficients of the object surface (30) and to calculate the reflection coefficients on the basis of the previously determined height profile and the measured signal intensity of at least one of the beams (510 and 520) so that merely one measurement of the intensities of the two evaluation beams (520, 510) is sufficient for determining the height profile of the measuring area observed and for eliminating the influence of the degree of reflection.

2. Device according to claim 1, **characterized in that** the signal evaluation unit (9) is designed to determine the phase difference of the two evaluation beams (520, 510) and to determine the height profile of the surface (30) from the intensities and the phase difference of the two evaluation beams (520, 510).

3. System for detecting the surface profile of an object surface (30) of an object by means of interferometric distance measurement, comprising

   - a light source (7) for generating a monochromatic light beam (84); and
   - the optical device (2) according to claim 1 or 2.

4. Device or system according to one of the preceding claims, **characterized in that** the mirror (5) has two parallel mirror segments (60, 70) whose mirror surfaces are offset in the direction of the normal.

5. Device or system according to one of the preceding claims, **characterized in that** the beam splitter (4) and the mirror (5) are integrated in an optical element, preferably a prism (600).

6. Device or system according to the preceding claim, **characterized in that** the optical element, preferably the prism (600), is formed from two adjacent glass blocks and two mirror surfaces or mirrors (60, 70) are applied, preferably vapor-deposited, to one side of a glass block.

7. Device or system according to one of the preceding claims, **characterized in that** the beam splitter (4) comprises a semi-transparent mirror (90) which allows a part of an incident light beam (84, 410, 420) to pass as a reference beam (470, 480) and reflects another part of an incident light beam as a measuring beam (430, 440) towards the object surface.

8. System according to one of the preceding claims, **characterized in that** the light source (7) is a laser.

9. System according to one of the preceding claims, **characterized in that** several light sources (7) are provided for generating a monochromatic light beam (84), the light beams (84) of which have different wavelengths and preferably no wavelength of a light beam (84) is an integer multiple of the wavelength of another light beam (84) and the light beams (84) of which are preferably bundled in a beam coupler.

10. Device or system according to one of the preceding claims, **characterized in that** the detector unit (8) comprises a time-delayed integration camera, preferably a color time-delayed integration camera, particularly preferably a time-delayed integration multi-channel line camera.

11. Device or system according to claim 9, **characterized in that** it comprises an optical element for separating the bundled light beams, which is arranged such that the separation of the light beams takes place before they impinge on the detector unit (8).

12. Device or system according to one of the preceding claims, **characterized in that** an objective (50) is arranged between the optical device (2) and the object surface (30) of the object in order to direct the measuring beams (430, 440) onto a measuring region on the object surface (30).

13. Device or system according to the preceding claim, **characterized in that** the objective (50) is an interchangeable lens with different magnifications or a fixed lens.

14. System according to one of the preceding claims with a drive unit for generating a relative movement between the optical device (2) and the object.

15. Method for detecting the surface profile of an object surface (30) of an object by means of interferometric distance measurement comprising the following steps:

Emitting a light beam (84) consisting of one or several monochromatic light components towards an optical device (2) by means of a light source (7);
Splitting the light beam (84) of the light source (7) into a first partial beam (410) and a second partial beam (420) by means of a beam splitter (3);
Splitting each partial beam (410, 420) of the light source (7) into a reference beam (470, 480) and a measuring beam (430, 440) by means of a beam splitter (4);
Directing the reference beams (470, 480) to a mirror (5);
Reflecting the reference beams (470, 480) on the mirror (5) and forming mirror beams (490, 500) which have a phase shift;
Directing the mirror beams (490, 500) to the beam splitter (4);
Reflecting the mirror beams (490, 500) at the beam splitter (4);
Directing the measuring beams (430, 440) to a measuring area on the object surface (30);
Reflecting the measuring beams (430, 440) on the object surface (30) and forming object beams (450, 460);
Directing the object beams (450, 460) to the beam splitter (4);
Interfering the mirror beams (490, 500) with the object beams (450, 460) and forming evaluation beams (510, 520), wherein the evaluation beams (510, 520) have a phase difference;
Detecting the evaluation beams (510, 520) by means of a detector unit (8);
Evaluating the detected evaluation beams (510, 520) and

Determining the surface profile of the object surface (30) by means of a signal evaluation unit (9);

Using the two measured intensity values of the evaluation beams (510, 520), both of which were reflected from the same location on the object surface (30), to compensate for the influence of the degree of reflection of the light beams on the object surface (30) when determining the surface profile and thereby to determine a correct profile for object surfaces (30) with non-100% reflection as well as for object surfaces with different reflection coefficients within an area to be measured,

**characterized in that** the method further comprises the following steps:

Generating a monochromatic inspection image for each wavelength on the basis of the determined reflection coefficients of the object surface (30), wherein the reflection coefficients are calculated on the basis of the previously determined height profile and the measured signal intensity of at least one of the beams (510 and 520) so that the correct profile is determined by just one measurement of the two evaluation beams (510, 520) and without adjusting the distance.

16. Method according to claim 15, **characterized by** the following steps:

Evaluating the detected evaluation beams (510, 520) and determining the phase difference; and compensating for the influence of the degree of reflection of the light beams on the object surface (30) by means of the determined phase difference when determining the surface profile.

17. Method according to claim 15 or 16, **characterized in that** the signal intensities of both beams (510 and 520) are used.

18. Method for optically inspecting an object surface (30) for defects, wherein an error evaluation is based on an inspection image determined by means of the method according to claim 17 and on a subsequent back calculation of the reflection of the light on the object surface (30), wherein the reflection $r_{xy}$ is preferably obtained by:

$$r_{xy} = \frac{i_{xy} - d_{xy}}{q_{xy} * M_{xy}^{max} * \left(1 + cos\left[\frac{2\pi}{\lambda_x/2} * \Delta z_y\right]\right)}$$

with $i_{xy}$ = measured value at wavelength x at a pixel y of a sensor;

$d_{xy}$ = dark signal value (without excitation light);

$q_{xy}$ = irradiated light intensity of the measurement;

$M_{xyz}^{max}$ = maximum value of the transfer function at wavelength x at pixel y of the sensor; and

$\Delta z_y = z_{mirror,z} - z_{sample}$. with $z_{mirror,z}$ = distance beam splitter (4) to reference mirror and $z_{sample}$ = distance beam splitter (4) to object surface.

**Revendications**

1. Dispositif optique, destiné à détecter un profil superficiel d'une surface (30) d'objet d'un objet au moyen d'une mesure de distance interférométrique, comprenant

un décomposeur de faisceau (3), destiné à décomposer un faisceau lumineux (84) d'une source lumineuse (7) en un premier faisceau partiel (410) et un deuxième faisceau partiel (420), le faisceau lumineux étant constitué d'une ou de plusieurs parts de lumière monochromatiques ;

un diviseur de faisceau (4), destiné à diviser chaque faisceau partiel (410, 420) de la source lumineuse (7) en un faisceau de référence (470, 480) et un faisceau de mesure (430, 440) ;

un miroir (5), destiné à réfléchir les deux faisceaux de référence (470, 480), qui est conçu de sorte à générer une différence de phase entre les faisceaux (490, 500) réfléchis ;

une unité de détection (8), destinée à détecter des faisceaux d'évaluation (520, 510) ;

et

une unité d'évaluation (9) de signaux, destinée à évaluer les faisceaux d'évaluation (520, 510) détectés et à déterminer le profil superficiel ;

chaque faisceau de mesure (430, 440) étant dirigé pour la réflexion sur une zone de mesure sur la surface (30) d'objet et après la réflexion, étant dirigé en tant que faisceau d'objet (450, 460) vers le diviseur de faisceau (4) ;

chaque faisceau de référence (470, 480) étant réfléchi sur le miroir et dirigé en tant que faisceau de miroir (490, 500) vers le diviseur de faisceau (4);

après l'interférence sur le diviseur de faisceau (4), le faisceau d'objet (450, 460) et le faisceau de miroir (490, 500) interférant respectivement et étant amenés en tant que faisceau d'évaluation (520, 510) chacun vers une unité de détection (8) pour l'évaluation ;

l'unité d'évaluation (9) de signaux étant conçue pour déterminer les intensités des deux faisceaux d'évaluation (520, 510) ; et

l'unité d'évaluation (9) de signaux étant conçue pour déterminer, en utilisant les intensités des deux faisceaux d'évaluation (520, 510) un profil de hauteur de la surface (30) pour lequel l'influence de la réflectance de la surface (30) sur les intensités est compensée par calcul, et pour déterminer de ce fait un profil correct pour des surfaces (30) d'objets qui ne font pas preuve de 100 % de réflexion, ainsi que pour des surfaces (30) d'objets faisant preuve de coefficients de réflexion différents à l'intérieur d'une zone qui doit être mesurée,

**caractérisé en ce que**

par ailleurs, l'unité d'évaluation de signaux est conçue de sorte à établir une image d'inspection monochromatique pour chaque longueur d'onde à partir des coefficients de réflexion déterminés de la surface (30) d'objet et à calculer les coefficients de réflexion à partir du profil de hauteur précédemment déterminé et de l'intensité de signaux mesurée d'au moins l'un des faisceaux (510 et 520), de sorte qu'une unique mesure des intensités des deux faisceaux d'évaluation (520, 510) soit suffisante pour la détermination du profil de hauteur de la région de mesure considérée et l'élimination de l'influence de la réflectance.

2. Dispositif selon la revendication 1, **caractérisé en ce que** l'unité d'évaluation (9) de signaux est conçue pour déterminer la différence de phase des deux faisceaux d'évaluation (520, 510) et pour déterminer à partir des intensités et de la différence de phase des deux faisceaux d'évaluation (520, 510) le profil de hauteur de la surface (30).

3. Système, destiné à détecter le profil superficiel d'une surface (30) d'objet d'un objet au moyen d'une mesure de distance interférométrique, comprenant

   - une source lumineuse (7), destinée à générer un faisceau lumineux (84) monochromatique ; et
   - le dispositif optique (2) selon la revendication 1 ou 2.

4. Dispositif ou système selon l'une quelconque des revendications précédentes, **caractérisé en ce que** le miroir (5) comporte deux segments (60, 70) de miroir parallèles, dont les surfaces de miroir sont décalées dans la direction de la normale.

5. Dispositif ou système selon l'une quelconque des revendications précédentes, **caractérisé en ce que** le diviseur de faisceau (4) et le miroir (5) sont intégrés dans un élément optique, de préférence un prisme (600).

6. Dispositif ou système selon la revendication précédente, **caractérisé en ce que** l'élément optique, de préférence le prisme (600) est constitué de deux blocs de verre adjacents l'un à l'autre et sur un côté d'un bloc en verre sont appliqué (e)s, de préférence déposé(e)s en phase vapeur deux surfaces de miroir ou miroirs (60, 70).

7. Dispositif ou système selon l'une quelconque des revendications précédentes, **caractérisé en ce que** le diviseur de faisceau (4) comprend un miroir (90) semi-transparent, qui laisse passer une partie d'un faisceau lumineux (84, 410, 420) incident en tant que faisceau de référence (470, 480) et qui réfléchit une autre partie d'un faisceau lumineux incident en tant que faisceau de mesure (430, 440) dans la direction de la surface d'objet.

8. Système selon l'une quelconque des revendications précédentes, **caractérisé en ce que** la source lumineuse (7) est un laser.

9. Système selon l'une quelconque des revendications précédentes, **caractérisé en ce que** plusieurs sources lumineuses (7) sont prévues pour générer un faisceau lumineux (84) monochromatique, dont les faisceaux lumineux (84) présentent des longueurs d'ondes différentes et de préférence aucune longueur d'onde d'un faisceau lumineux (84) n'est un multiple entier de la longueur d'onde d'un autre faisceau lumineux (84) et dont les faisceaux lumineux (84) sont concentrés de préférence dans un combineur de faisceaux.

10. Dispositif ou système selon l'une quelconque des revendications précédentes, **caractérisé en ce que** l'unité de détection (8) comprend une caméra d'intégration à décalage temporel, de préférence une caméra d'intégration à décalage temporel couleur, de manière particulièrement préférentielle, une caméra d'intégration à décalage temporel multicanaux à réseau linéaire.

**11.** Dispositif ou système selon la revendication 9, **caractérisé en ce qu'**il comprend un élément optique destiné à séparer les faisceaux lumineux concentrés, qui est placé de sorte que la séparation des faisceaux lumineux ait lieu avant leur incidence sur l'unité de détection (8).

**12.** Dispositif ou système selon l'une quelconque des revendications précédentes, **caractérisé en ce qu'**un objectif (50) est placé entre le dispositif optique (2) et la surface (30) d'objet de l'objet, pour guider les faisceaux de mesure (430, 440) sur une zone de mesure sur la surface (30) d'objet.

**13.** Dispositif ou système selon la revendication précédente, **caractérisé en ce que** l'objectif (50) est un objectif interchangeable avec différents grossissements ou un objectif fixe.

**14.** Système selon l'une quelconque des revendications précédentes, pourvu d'une unité d'entraînement, destinée à générer un déplacement relatif entre le dispositif optique (2) et l'objet.

**15.** Procédé, destiné à détecter le profil superficiel d'une surface (30) d'objet d'un objet au moyen d'une mesure de distance interférométrique, comprenant les étapes suivantes consistant à :

émettre un faisceau lumineux (84) constitué d'une ou de plusieurs parts de lumière monochromatiques dans la direction d'un dispositif optique (2) au moyen d'une source lumineuse (7) ;
décomposer le faisceau lumineux (84) de la source lumineuse (7) en un premier faisceau partiel (410) et un deuxième faisceau partiel (420), au moyen d'un décomposeur de faisceau (3) ;
diviser chaque faisceau partiel (410, 420) de la source lumineuse (7) en un faisceau de référence (470, 480) et un faisceau de mesure (430, 440) au moyen d'un diviseur de faisceau (4) ;
diriger les faisceaux de référence (470, 480) vers un miroir (5);
réfléchir les faisceaux de référence (470, 480) sur le miroir (5) et créer des faisceaux de miroir (490, 500), lesquels présentent un décalage de phase ;
diriger les faisceaux de miroir (490, 500) vers le diviseur de faisceau (4) ;
réfléchir les faisceaux de miroir (490, 500) sur le diviseur de faisceau (4) ;
diriger les faisceaux de mesure (430, 440) sur une zone de mesure sur la surface (30) d'objet ;
réfléchir les faisceaux de mesure (430, 440) sur la surface (30) d'objet et créer des faisceaux d'objet (450, 460) ;
diriger les faisceaux d'objet (450, 460) vers le diviseur de faisceau (4) ;
faire interférer les faisceaux de miroir (490, 500) avec les faisceaux d'objet (450, 460) et créer des faisceaux d'évaluation (510, 520), les faisceaux d'évaluation (510, 520) présentant une différence de phase ;
détecter les faisceaux d'évaluation (510, 520) au moyen d'une unité de détection (8);
évaluer les faisceaux d'évaluation (510, 520) détectés et
déterminer le profil superficiel de la surface (30) d'objet au moyen d'une unité d'évaluation (9) de signaux ;
utiliser les deux valeurs d'intensité mesurées des faisceaux d'évaluation (510, 520), lesquels sont réfléchis tous deux à partir du même endroit sur la surface (30) d'objet, pour compenser l'influence de la réflectance des faisceaux lumineux sur la surface (30) d'objet lors de la détermination du profil superficiel et déterminer de ce fait un profil correct pour des surfaces (30) d'objets dont la réflexion n'est pas de 100%, ainsi que pour des surfaces d'objets à différents coefficients de réflexion à l'intérieur d'une zone qui doit être mesurée,
**caractérisé en ce que** le procédé comprend par ailleurs les étapes suivantes, consistant à :
établir une image d'inspection monochromatique pour chaque longueur d'onde à partir des coefficients de réflexion déterminés de la surface (30) d'objet, les coefficients de réflexion étant calculés à partir du profil de hauteur précédemment déterminé et de l'intensité de signaux mesurée d'au moins l'un des faisceaux (510 et 520), de sorte que le profil correct soit déterminé à partir d'une unique mesure des deux faisceaux d'évaluation (510, 520) et sans modification de l'écart.

**16.** Procédé selon la revendication 15, **caractérisé par** les étapes suivantes, consistant à :
évaluer les faisceaux d'évaluation (510, 520) détectés et déterminer la différence de phase ; et compenser l'influence de la réflectance des faisceaux lumineux sur la surface (30) d'objet au moyen de la différence de phase déterminée lors de la détermination du profil superficiel.

**17.** Procédé selon la revendication 15 ou 16, **caractérisé en ce que** les intensités de signaux des deux faisceaux (510 et 520) sont utilisées.

**18.** Procédé, destiné à l'inspection optique d'une surface (30) d'objet au niveau de défauts, une évaluation des défauts étant basée sur une image d'inspection déterminée au moyen du procédé selon la revendication 17 et sur un calcul rétroactif suivant sur la réflexion de la lumière sur la surface (30) d'objet, la réflexion $r_{xy}$ étant obtenue par :

$$r_{xy} = \frac{i_{xy} - d_{xy}}{q_{xy} * M\frac{max}{xy} * \left(1 + \cos\left[\frac{2\pi}{\frac{\lambda x}{2}} * \Delta Z_y\right]\right)},$$

avec $i_{xy}$ = valeur de mesure à la longueur d'onde x sur un pixel y d'un capteur ;
$d_{xy}$ = valeur de signal sombre (sans lumière d'excitation) ;
$q_{xy}$ = intensité lumineuse irradiée de la mesure ;

$M\frac{max}{xyz}$ = valeur maximale de la fonction de transfert à xyz des longueurs d'ondes *x* sur le pixel *y* du capteur ; et
$\Delta Z_y$ = $Z_{mirror,z}$·- $Z_{sample}$, avec $Z_{mirror,z}$ = écart du diviseur de faisceau (4) par rapport au miroir de référence et $Z_{sample}$ = écart du diviseur de faisceau (4) par rapport à la surface de l'objet.

EP 4 004 486 B1

Fig. 1

26

Einmalig bei Systemaufbau

Dunkelmessung

Hellsignalmessung
bei Probenabstand
$z_i$

Wiederholung
bis für alle Wellenlängen
ein komplette
Wellenlänge
durchlaufen wurde

Änderung des
Probenabstandes
um Schritt dz

Bestimmung von
$M^{max}$ und $\Delta z_r$

Messdurchläufe

Fig. 2

Fig. 3

EP 4 004 486 B1

Fig. 4

Fig. 5

Fig. 6

**IN DER BESCHREIBUNG AUFGEFÜHRTE DOKUMENTE**

**In der Beschreibung aufgeführte Patentdokumente**

- US 2011032503 A
- US 2009009773 A
- DE 102014108886
- DE 69524298
- CN 109387155
- EP 3477252 A